(19) Europäisches Patentamt
European Patent Office
Office européen des brevets

(11) **EP 4 593 446 A1**

(12) **EUROPEAN PATENT APPLICATION**
published in accordance with Art. 153(4) EPC

(43) Date of publication:
**30.07.2025 Bulletin 2025/31**

(21) Application number: **23868476.5**

(22) Date of filing: **11.09.2023**

(51) International Patent Classification (IPC):
*H04W 16/28* (2009.01)  *H04B 7/0408* (2017.01)
*H04W 72/27* (2023.01)  *H04W 84/04* (2009.01)

(52) Cooperative Patent Classification (CPC):
**H04B 7/0408; H04W 16/28; H04W 72/27;
H04W 84/04**

(86) International application number:
**PCT/KR2023/013594**

(87) International publication number:
**WO 2024/063422 (28.03.2024 Gazette 2024/13)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **21.09.2022 KR 20220119505**

(71) Applicant: **LG Electronics Inc.**
**Yeongdeungpo-gu
Seoul 07336 (KR)**

(72) Inventors:
• **BAN, Choongsang
Seoul 06772 (KR)**
• **YOU, Hyangsun
Seoul 06772 (KR)**
• **KO, Hyunsoo
Seoul 06772 (KR)**
• **SHIM, Jaenam
Seoul 06772 (KR)**

(74) Representative: **Plasseraud IP
104 Rue de Richelieu
CS92104
75080 Paris Cedex 02 (FR)**

(54) **BEAM INDICATION METHOD AND DEVICE IN WIRELESS COMMUNICATION SYSTEM**

(57)    An operation method of an electronic device in a wireless communication system, according to various embodiments of the present disclosure, may comprise the steps of: determining beam set indices of candidate beam sets consisting of a plurality of candidate beams for a simultaneous multi-beam operation that is performed simultaneously through an access link with a user equipment (UE), transmitting, to a base station (BS), information on the beam set indices of the candidate beam sets; receiving, from the BS, indication information for the multi-beam operation on the basis of at least one candidate beam set index from among the beam set indices; and performing the multi-beam operation through the access link with the UE on the basis of the at least one candidate beam set index

[FIG. 19]

```
                    Start
                      │
   Determine beam set indices of candidate beam sets     ── S1910
                      │
   Transmit information for beam set indices to base station   ── S1920
                      │
   Receive indication information for multi-beam
              operation from base station                 ── S1930
                      │
   Perform multi-beam operation with UE through access link   ── S1940
                      │
                     End
```

**Description**

[TECHNICAL FIELD]

The present disclosure relates to a wireless communication system. Particularly, the present disclosure relates to a method and a device for beam indication in the wireless communication system.

[BACKGROUND]

Wireless access systems have been widely deployed to provide various types of communication services such as voice and data. In general, the wireless access system is a multiple access system capable of supporting communication with multiple users by sharing available system resources (bandwidth, transmission power, etc.). Examples of the multiple access system include a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

In particular, as more and more communication devices require larger communication capacity, an enhanced mobile broadband (eMBB) communication technology is proposed compared to the existing radio access technology (RAT). In addition, massive machine type communications (mMTC), which connects multiple devices and objects to provide various services anytime and anywhere, as well as communication systems that consider reliability and latency-sensitive services/user equipment and various technology configurations for these are being proposed.

[DISCLOSURE]

[TECHNICAL PROBLEM]

In order to solve the above-described problem, the present disclosure provides a method and a device for beam indication in a wireless communication system.

In order to solve the above-described problem, the present disclosure provides a method for configuring or indicating, by a gNB, a beam which an RU of an NCR uses in an access link.

The technical objects to be achieved by the present disclosure are not limited to those that have been described hereinabove merely by way of example, and other technical objects that are not mentioned can be clearly understood by those skilled in the art, to which the present disclosure pertains, from the following descriptions.

[TECHNICAL SOLUTION]

An operation method of an electronic device in a wireless communication system according to an embodiment of the present disclosure may comprise determining beam set indices of candidate beam sets consisting of a plurality of candidate beams for a multi-beam operation that is performed simultaneously through an access link with a user equipment (UE), transmitting, to a base station (BS), information for the beam set indices of the candidate beam sets, receiving, from the BS, indication information for the multi-beam operation based on at least one candidate beam set index among the beam set indices, and performing the multi-beam operation through the access link with the UE based on the at least one candidate beam set index.

The candidate beam sets for a downlink transmit beam (DL TX beam) and an uplink receive beam (UL Rx beam) between the electronic device and the UE may be independently configured. The indication information may independently indicate the downlink transmit beam and the uplink receive beam.

Each of the candidate beam sets may include a plurality of candidate beams for the downlink transmit beam (DL TX beam) and a plurality of candidate beams for the uplink receive beam (UL Rx beam) between the electronic device and the UE. The indication information may include information for a downlink transmit beam and an uplink receive beam to be actually used within the at least one candidate beam set.

Each of the candidate beam sets may include a plurality of beam pairs of the downlink transmit beam (DL TX beam) and the uplink receive beam (UL Rx beam) between the electronic device and the UE.

Transmission and reception through the access link between the electronic device and the UE may be simultaneously performed through the multi-beam operation.

The method may further comprise transmitting capability information of the electronic device to the BS. The capability information may include a number of indices for the plurality of candidate beams included in the candidate beam sets, information for beam types of the indices for the plurality of candidate beams, and information for a multi-beam set in the access link. The information for the beam types of the indices for the plurality of candidate beams may include information for beam widths of the indices for the plurality of candidate beams.

The indication information may be configured based on the information for the beam widths of the indices for the plurality of candidate beams and the information for the multi-beam set.

An operating method of a base station (BS) in a wireless communication system according to an embodiment of the present disclosure may comprise receiving, from an electronic device, information for beam set indices of candidate beam sets consisting of a plurality of candidate beams for a multi-beam operation that is performed simultaneously through an access link with the electronic device and a user equipment (UE), and transmitting, from the electronic device, indication information for the multi-beam operation based on at least one candidate beam set index among the beam set indices. The multi-beam operation may be performed through the access link between the electronic device and the UE based on the at least one candidate beam set index.

The candidate beam sets for a downlink transmit beam (DL TX beam) and an uplink receive beam (UL Rx beam) between the electronic device and the UE may be independently configured. The indication information may independently indicate the downlink transmit beam and the uplink receive beam.

Each of the candidate beam sets may include a plurality of candidate beams for the downlink transmit beam (DL TX beam) and a plurality of candidate beams for the uplink receive beam (UL Rx beam) between the electronic device and the UE. The indication information may include information for a downlink transmit beam and an uplink receive beam to be actually used within the at least one candidate beam set.

Each of the candidate beam sets may include a plurality of beam pairs of the downlink transmit beam (DL TX beam) and the uplink receive beam (UL Rx beam) between the electronic device and the UE.

Transmission and reception through the access link between the electronic device and the UE may be simultaneously performed through the multi-beam operation.

The method may further comprise receiving capability information of the electronic device from the electronic device. The capability information may include the number of indices for the plurality of candidate beams included in the candidate beam sets, information for beam types of the indices for the plurality of candidate beams, and information for a multi-beam set in the access link. The information for the beam types of the indices for the plurality of candidate beams may include information for beam widths of the indices for the plurality of candidate beams.

The indication information may be configured based on the information for the beam widths of the indices for the plurality of candidate beams and the information for the multi-beam set.

An electronic device in a communication system according to an embodiment of the present disclosure may comprise a first device including a first transceiver, a second device including a first transceiver, at least one processor, and at least one memory operably connectable to the at least one processor, and storing instructions of performing operations when executed by the at least one processor, and the operations may include all steps of the method of any one of claims 1 to 7.

A base station (BS) in a communication system according to an embodiment of the present disclosure may comprise a transceiver, at least one processor, and at least one memory operably connectable to the at least one processor, and storing instructions of performing operations when executed by the at least one processor, and the operations may include all steps of the method of any one of claims 8 to 14.

A control device controlling an electronic device in a communication system according to an embodiment of the present disclosure may comprise at least one processor and at least one memory operably accessing the at least one processor. The at least one memory may store instructions for performing operations based on being executed by the at least one processor, and the operations may include all steps of the method of any one of claims 1 to 7.

A control device controlling a base station (BS) in a communication system according to an embodiment of the present disclosure may comprise at least one processor and at least one memory operably accessing the at least one processor. The at least one memory may store instructions for performing operations based on being executed by the at least one processor, and the operations may include all steps of the method of any one of claims 8 to 14.

In one or more non-transitory computer readable media according to an embodiment of the present disclosure storing one or more instructions, the one or more instructions may perform operations based on being executed by one or more processors, and the operations may include all steps of the method of any one of claims 1 to 7.

In one or more non-transitory computer readable media according to an embodiment of the present disclosure storing one or more instructions, the one or more instructions may perform operations based on being executed by one or more processors, and the operations may include all steps of the method of any one of claims 8 to 14.

[ADVANTAGEOUS EFFECTS]

According to the present disclosure, as a gNB separately handles information for DL and UL candidate beams, a flexible configuration and a flexible indication not limited by a constitution of a specific beam pair may be possible.

According to the present disclosure, a base station indicates a beam which an RU of an NCR uses based on a preconfigured candidate beam index to enable a multi-beam operation.

According to the present disclosure, the gNB indicates or configures the beam which the RU of the NCR uses by using an RS ID to align with and respond to an existing bema management mechanism.

[BRIEF DESCRIPTION OF THE DRAWINGS]

The accompanying drawings, which are included to provide a further understanding of the present disclosure and constitute a part of the detailed description, illustrate embodiments of the present disclosure and serve to explain technical features of the present disclosure together with the description. Technical features of the present disclosure are not limited to specific drawings, and features disclosed in each drawing can be combined with each other to form a new embodiment. Reference numerals in each drawing may denote structural elements.

FIG. 1 illustrates an example of physical channels and general signal transmission used in the 3GPP system.
FIG. 2 illustrates an example of a structure of a radio frame used in NR.
FIG. 3 illustrates an example of a slot structure of an NR frame.
FIG. 4 illustrates an example of a self-contained slot.
FIGS. 5 to 8 illustrate an example of transmission network architecture for 5G.
FIG. 9 illustrates an example of a topology in which an NCR performs transmission and reception between a base station and a UE.
FIG. 10 illustrates an example of a beamforming operation of an existing RF repeater.
FIG. 11 illustrates an example of a beamforming operation of an NCR.
FIG. 12 is a diagram illustrating an example of a Tx beam direction operated by a gNB and a Tx beam direction operated by an RU according to an embodiment of the present disclosure.
FIG. 13 is a diagram illustrating an example of an association between a transmit/receive beam set and a transmit/receive beam set index according to an embodiment of the present disclosure.
FIG. 14 is a diagram illustrating an example of a candidate beam set configuration and an association for a DL Tx beam and a UL Rx beam of an RU according to an embodiment of the present disclosure.
FIGS. 15 to 17 are diagrams illustrating an example of an association between a plurality of transmit/receive beam sets and actual transmit/receive beam set indices according to an embodiment of the present disclosure.
FIG. 18 is a diagram illustrating an example of an association between a candidate beam set and a multi-beam set according to an embodiment of the present disclosure.
FIG. 19 is a diagram illustrating an embodiment of a signal transmission and reception method according to an embodiment of the present disclosure.
FIG. 20 is a diagram illustrating an embodiment of a signal transmission and reception method according to another embodiment of the present disclosure.
FIG. 21 illustrates a communication system applied to various embodiments of the present disclosure.
FIG. 22 illustrates wireless devices applicable to various embodiments of the present disclosure.
FIG. 23 illustrates another example of wireless devices applicable to various embodiments of the present disclosure.
FIG. 24 illustrates a signal processing circuit for a transmission signal.
FIG. 25 illustrates an example of a wireless communication device applicable to the present disclosure.

[DETAILED DESCRIPTION]

In various embodiments of the present disclosure, "A or B" may mean "only A," "only B" or "both A and B." In other words, in various embodiments of the present disclosure, "A or B" may be interpreted as "A and/or B." For example, in various embodiments of the present disclosure, "A, B or C" may mean "only A," "only B," "only C" or "any combination of A, B and C."

A slash (/) or comma used in various embodiments of the present disclosure may mean "and/or." For example, "A/B" may mean "A and/or B." Hence, "A/B" may mean "only A," "only B" or "both A and B." For example, "A, B, C" may mean "A, B, or C."

In various embodiments of the present disclosure, "at least one of A and B" may mean "only A," "only B" or "both A and B." In addition, in various embodiments of the present disclosure, the expression of "at least one of A or B" or "at least one of A and/or B" may be interpreted in the same meaning as "at least one of A and B."

Further, in various embodiments of the present disclosure, "at least one of A, B, and C" may mean "only A," "only B," "only C" or "any combination of A, B and C." In addition, "at least one of A, B or C" or "at least one of A, B and/or C" may mean "at least one of A, B, and C."

Further, parentheses used in various embodiments of the present disclosure may mean "for example." Specifically, when "control information (PDCCH)" is described, "PDCCH" may be proposed as an example of "control information." In other words, "control information" in various embodiments of the present disclosure is not limited to "PDCCH," and "PDDCH" may be proposed as an example of "control information." In addition, even when "control information (i.e., PDCCH)" is described, "PDCCH" may be proposed as an example of "control information."

Technical features described individually in one drawing in various embodiments of the present disclosure may be implemented individually or simultaneously.

The following technologies can be applied to various wireless access systems such as code division multiple access (CDMA), frequency division multiple access (FDMA), time division multiple access (TDMA), orthogonal frequency division multiple access (OFDMA), or single carrier-frequency division multiple access (SC-FDMA). The CDMA may be implemented as radio technology such as Universal Terrestrial Radio Access (UTRA) or CDMA2000. The TDMA may be implemented as radio technology such as a global system for mobile communications (GSM)/general packet radio service (GPRS)/enhanced data rates for GSM evolution (EDGE). The OFDMA may be implemented as radio technology such as Institute of Electrical and Electronics Engineers (IEEE) 802.11 (Wi-Fi), IEEE 802.16 (WiMAX), IEEE 802.20, Evolved UTRA (E-UTRA), or the like. The UTRA is a part of Universal Mobile Telecommunications System (UMTS). 3rd Generation Partnership Project (3GPP) Long Term Evolution (LTE) is a part of Evolved UMTS (E-UMTS) using the E-UTRA and LTE-Advanced (A)/LTE-A pro is an evolved version of the 3GPP LTE. 3GPP NR (New Radio or New Radio Access Technology) is an evolved version of the 3GPP LTE/LTE-A/LTE-A pro.

For clarity of description, the technical spirit of the present disclosure is described based on the 3GPP communication system (e.g., LTE or NR etc), but the technical spirit of the disclosure is not limited thereto. LTE means technology after 3GPP TS 36.xxx Release 8. In detail, LTE technology after 3GPP TS 36.xxx Release 10 is referred to as the LTE-A and LTE technology after 3GPP TS 36.xxx Release 13 is referred to as the LTE-A pro. The 3GPP NR means technology after TS 38.xxx Release 15. The 3GPP 6G may mean technology after TS Release 17 and/or Release 18. "xxx" denotes a detailed standard document number The LTE/NR/6G may be collectively referred to as the 3GPP system. For background art, terms, abbreviations, etc. used in the present disclosure, reference can be made to items described in standard documents published prior to the present disclosure. For example, the following document may be referred to.

3GPP LTE

- 36.101: User Equipment (UE) radio transmission and reception
- 36.211: Physical channels and modulation
- 36.212: Multiplexing and channel coding
- 36.213: Physical layer procedures
- 36.214: Physical layer Measurements
- 36.321: Medium Access Control (MAC) protocol specification
- 36.331: Radio Resource Control (RRC)
- 37.213: Physical layer procedures for shared spectrum channel access

3GPP NR

- 38.101-1: Part 1: Range 1 Standalone
- 38.101-2: Part 2: Range 2 Standalone
- 38.101-2: Part 3: Range 1 and Range 2 Interworking operation with other radios
- 38.211: Physical channels and modulation
- 38.212: Multiplexing and channel coding
- 38.213: Physical layer procedures
- 38.214: Physical layer Measurements
- 38.215: Physical layer measurements
- 38.321: Medium Access Control (MAC) protocol specification
- 38.331: Radio Resource Control (RRC)

For the purpose of explaining the present disclosure, terms not defined above are as follows.

IAB-node: RAN node that supports wireless access to UEs and wirelessly backhauls the access traffic.

IAB-donor: RAN node that provides UE's interface to core network and wireless backhauling functionality to IAB nodes.

Abbreviations used in the present disclosure may be defined as follows.

IAB: Integrated Access and Backhaul

CSI-RS: Channel State Information Reference Signal
DgNB: Donor gNB
AC: Access
BH: Backhaul
FH: Fronthaul
CU: Centralized Unit
DU: Distributed Unit
RU: Remote Unit
MT: Mobile terminal
CU: Centralized Unit
IAB-MT: IAB mobile terminal
NGC: Next-Generation Core network
SA: Stand-alone
NSA: non-stand-alone
EPC: Evolved Packet Core

## Physical Channel and Frame Structure

Physical Channel and General Signal Transmission

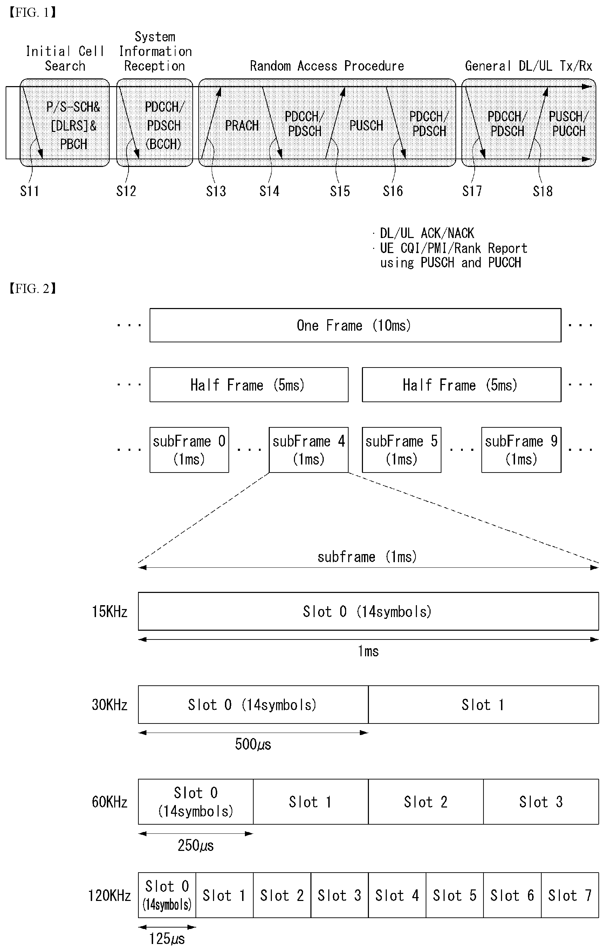

FIG. 1 illustrates an example of physical channels and general signal transmission used in the 3GPP system.

In a wireless communication system, the UE receives information from the eNB through downlink (DL) and the UE transmits information from the eNB through Uplink (UL). The information which the eNB and the UE transmit and receive includes data and various control information and there are various physical channels according to a type/use of the information which the eNB and the UE transmit and receive.

When the UE is powered on or newly enters a cell, the UE performs an initial cell search operation such as synchronizing with the eNB (S11). To this end, the UE may receive a primary synchronization signal (PSS) and a (secondary synchronization signal (SSS) from the eNB and synchronize with the eNB and acquire information such as a cell ID or the like. Thereafter, the UE may receive a physical broadcast channel (PBCH) from the eNB and acquire in-cell broadcast information. The UE receives a downlink reference signal (DL RS) in an initial cell search step to check a downlink channel status.

A UE that completes the initial cell search receives a Physical Downlink Control Channel (PDCCH) and a Physical Downlink Control Channel (PDSCH) according to information loaded on the PDCCH to acquire more specific system information (S12).

When there is no radio resource first accessing the eNB or for signal transmission, the UE may perform a Random Access Procedure (RACH) to the eNB (S13 to S16). To this end, the UE may transmit a specific sequence to a preamble through a Physical Random Access Channel (PRACH) (S13 and S15) and receive a response message (Random Access Response (RAR) message) for the preamble through the PDCCH and a corresponding PDSCH. In the case of a contention based RACH, a Contention Resolution Procedure may be additionally performed (S16).

The UE that performs the above procedure may then perform PDCCH/PDSCH reception (S17) and Physical Uplink Shared Channel (PUSCH)/Physical Uplink Control Channel (PUCCH) transmission (S18) as a general uplink/-downlink signal transmission procedure. Control information that the UE transmits to the base station may be referred to as uplink control information (UCI). The UCI may include hybrid automatic repeat and request (HARQ) acknowledgement/negative ACK (ACK/NACK), scheduling request (SR), channel state information (CSI), etc. The CSI may include a channel quality indication (CQI), a precoding matrix indicator (PMI), a rank indicator (RI), etc. The UCI may be generally transmitted on the PUCCH, but if control information and data need to be transmitted at the same time, the UCI may be transmitted on the PUSCH. The UE may aperiodically transmit the UCI to the base station on the PUSCH based on a request/indication of the network.

New radio access technology (new RAT, NR) is described below.

As more and more communication devices require larger communication capacity, there is a need for enhanced mobile broadband communication compared to the existing radio access technology (RAT). Massive machine type communications (MTC) which provide various services anytime and anywhere by connecting many devices and objects are also one of the major issues to be considered in next-generation communications. In addition, a communication system design considering a service/UE sensitive to reliability and latency is also being discussed. As above, the introduction of next generation RAT considering enhanced mobile broadband communication, massive MTC, ultra-reliable and low latency communication (URLLC), etc. is discussed, and the technology is called new RAT or NR for convenience in various embodiments of the present disclosure.

Orthogonal Frequency Division Multiplexing (OFDM) Numerology

FIG. 2 illustrates an example of a structure of a radio frame used in NR.

A new radio access technology (RAT) system uses an OFDM transmission scheme or a similar transmission scheme thereto. The new RAT system may follow different OFDM parameters from OFDM parameters of LTE. Alternatively, the new RAT system may follow numerology of existing LTE/LTE-A as it is but have a larger system bandwidth (e.g., 100 MHz). Alternatively, one cell may support a plurality of numerologies. In other words, UEs that operate with different numerologies may coexist in one cell.

Referring to FIG. 2, in NR, uplink and downlink transmission consists of frames. A radio frame has a length of 10 ms and is defined as two 5 ms half-frames (HFs). The half-frame is defined as five 1 ms subframes (SFs). The subframe is split into one or more slots, and the number of slots in the subframe depends on a subcarrier spacing (SCS). Each slot includes 12 or 14 OFDM(A) symbols depending on a cyclic prefix (CP). When a normal CP is used, each slot includes 14 symbols. When an extended CP is used, each slot includes 12 symbols. The symbol may include an OFDM symbol (or CP-OFDM symbol) and an SC-FDMA symbol (or DFT-s-OFDM symbol).

Table 1 shows that when the normal CP is used, the number of symbols per slot, the number of slots per frame, and the number of slots per subframe vary depending on the SCS.

[Table 1]

| SCS ($15*2^u$) | $N^{slot}_{symb}$ | $N^{frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

In Table 1, $N^{slot}_{symb}$ is the number of symbols in the slot, $N^{ftame,u}_{slot}$ is the number of slots in the frame, and $N^{subframe,u}_{slot}$ is the number of slots in the subframe.

Table 2 shows that when the extended CP is used, the number of symbols per slot, the number of slots per frame, and the number of slots per subframe vary depending on the SCS.

[Table 2]

| SCS ($15*2^u$) | $N^{slot}_{symb}$ | $N^{frame,u}_{slot}$ | $N^{subframe,u}_{slot}$ |
|---|---|---|---|
| 60KHz (u=2) | 12 | 40 | 4 |

NR supports multiple numerologies (or subcarrier spacing (SCS)) for supporting diverse 5th generation (5G) services. For example, if the SCS is 15 kHz, the NR supports a wide area in conventional cellular bands; if the SCS is 30 kHz/60 kHz, the NR supports a dense-urban, lower latency and wider carrier bandwidth; and if the SCS is 60 kHz or higher, the NR supports a bandwidth greater than 24.25 GHz in order to overcome phase noise.

An NR frequency band may be defined as two types of frequency ranges FR1 and FR2. Values of frequency ranges may be changed. For example, the two types of frequency ranges FR1 and FR2 may be defined as in Table 3 below.

[Table 3]

| Frequency Range designation | Corresponding Frequency range | Subcarrier Spacing |
|---|---|---|
| FR1 | 450MHz - 6000MHz | 15, 30, 60kHz |
| FR2 | 24250MHz - 52600MHz | 60, 120, 240kHz |

For convenience of explanation, FR1 among the frequency ranges used in the NR system may mean "sub 6 GHz range", and FR2 may mean "above 6 GHz range" and may call millimeter wave (mmW).

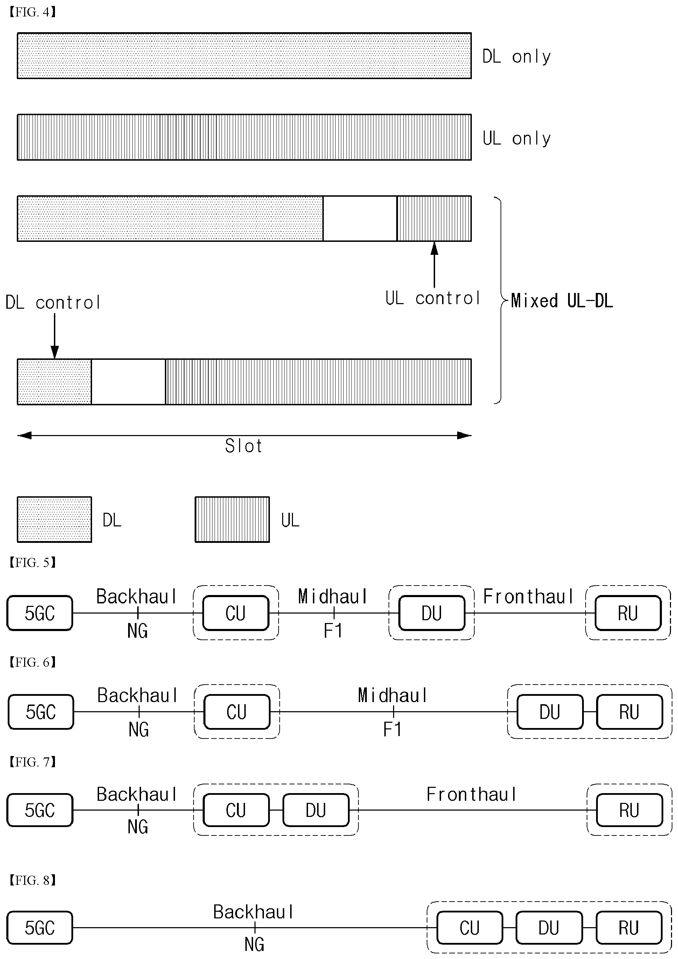

As described above, values of the frequency range of the NR system may be changed. For example, FR1 may include a range of 410 MHz to 7125 MHz as shown in FIG. 4 below.

[Table 4]

| Frequency Range designation | Corresponding Frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Referring to FIG. 4, FR1 may include a frequency band of 6 GHz (or 5850, 5900, 5925 MHz, etc.) or higher. For example, the frequency band of 6 GHz (or 5850, 5900, 5925 MHz, etc.) or higher included in FR1 may include an unlicensed band. The unlicensed band may be used for diverse purposes, for example, used for communication for vehicles (e.g., self-driving).

In the NR system, OFDM(A) numerology (e.g., SCS, CP length, etc.) may be differently configured between a plurality of cells merged into one UE. Hence, an (absolute time) duration of a time resource (e.g., subframe (SF), slot or transmission time interval (TTI)) (for convenience, collectively referred to as a time unit (TU)) consisting of the same number of symbols may be configured differently between the merged cells.

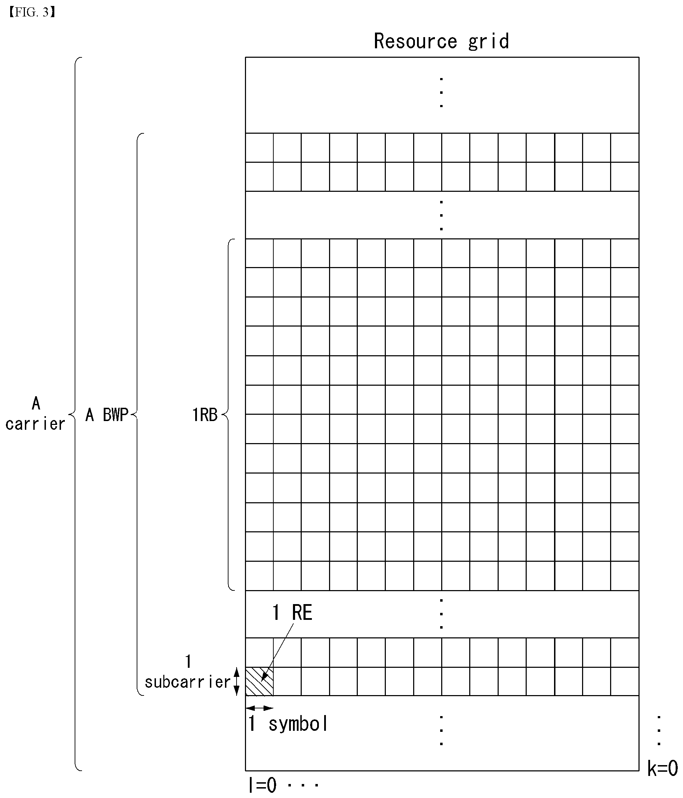

FIG. 3 illustrates an example of a slot structure of an NR frame.

Referring to FIG. 3, a slot includes a plurality of symbols in a time domain. For example, one slot includes seven symbols in a normal CP, while one slot includes six symbols in an extended CP. A carrier includes a plurality of subcarriers in a frequency domain. A resource block (RB) is defined as a plurality of (e.g., 12) consecutive subcarriers in the frequency domain. A bandwidth part (BWP) is defined as a plurality of consecutive (P)RBs in the frequency domain and may correspond to one numerology (e.g., SCS, CP length, etc.). The carrier may include up to N (e.g., five) BWPs. The data communication may be performed through an activated BWP, and only one BWP may be activated in one UE. In a resource grid, each element is referred to as a resource element (RE), and one complex symbol may be mapped to each RE.

FIG. 4 illustrates an example of a self-contained slot.

In the NR system, a frame is characterized by a self-contained structure in which all of a DL control channel, DL or UL data, and an UL control channel can be included in one slot. For example, the first N symbols in the slot may be used to transmit the DL control channel (hereinafter, referred to as a DL control region), and the last M symbols in the slot may be used to transmit the UL control channel (hereinafter, referred to as an UL control region), where N and M are an integer greater than or equal to 0. A resource region (hereinafter, referred to as a data region) between the DL control region and the UL control region may be used for DL data transmission or UL data transmission. For example, the following configuration may be considered. Each duration is listed in chronological order.

    1. DL only configuration
    2. UL only configuration
    3. Mixed UL-DL configuration

- DL region + Guard Period (GP) + UL control region
- DL control region + GP + UL region

    * DL region: (i) DL data region, (ii) DL control region + DL data region
    * UL region: (i) UL data region, (ii) UL data region + UL control region

The PDCCH may be transmitted in the DL control region, and the PDSCH may be transmitted in the DL data region. The PUCCH may be transmitted in the UL control region, and the PUSCH may be transmitted in the UL data region. On the PDCCH, downlink control information (DCI), for example, DL data scheduling information, UL data scheduling information, etc., may be transmitted. On the PUCCH, uplink control information (UCI), for example, positive acknowledgement/negative acknowledgement (ACK/NACK) information, channel state information (CSI), scheduling request (SR), etc., for DL data may be transmitted. The GP provides a time gap in a process of switching the base station and the UE from a transmission mode to a reception mode or a process of switching from the reception mode to the transmission mode. Some symbols at time at which DL is switched to UL in the subframe may be configured as the GP.

FIGS. 5 to 8 illustrate an example of transmission network architecture for 5G.

Referring to FIG. 5, ITU-T (Telecommunication Standardization Sector) has adopted slightly different 5G transmission network architecture consisting of three logical elements of a control unit (CU), a distributed unit (DU) and a radio unit (RU). In this model, functions of a mid-layer and a lower layer are split as the DU and the RU. Based on the functional split between the DU and the RU, the RU implements a radio frequency (RF) functionality, and if possible, also implements a low-PHY functionality and a high-PHY functionality.

Referring to FIGS. 6 to 8, CUs, DUs, and RUs may be grouped in different combinations to form actual physical network elements based on network requirements. This may provide flexibility to accommodate various network architectures, applications, and transmission network requirements.

As illustrated in FIGS. 5 to 8, a transmission network between the 5th generation core network (5GC) and the CU is referred to as backhaul, and a backhaul network implements a 3GPP next generation (NG) interface. In the same manner, a transmission network between the CU and the DU is referred to as midhaul, and a midhaul network implements a 3GPP F1 interface. Finally, a transmission network between the DU and the RU is referred to as fronthaul. The backhaul, the midhaul, and the fronthaul are generally referred to as xhaul.

Reconfigurable Intelligent Surface (RIS)

An RIS may be used to control the propagation of electromagnetic waves by changing electrical and magnetic properties of the electromagnetic waves on the surface. The RIS is also known as an intelligent reflecting surface (IRS) and a large intelligent surface (LIS) and may have a programmable structure. The RIS may be used to sense a wireless environment by integrating sensing functions, in addition to controlling the propagation of the electromagnetic waves. The properties of wireless channels can be controlled at least partially by deploying the RIS in an environment in which a wireless system operates.

The functionality of the RIS can provide many advantages, including the possibility of improving stability and coverage performance through beamforming or range extension. The ability to control a propagation environment has somewhat changed the existing wireless system design paradigm in which wireless channels were always considered as uncontrollable entities that distorted the transmitted signal. Thus, a transmitter (TX) and a receiver (RX) have been traditionally designed to equalize an effect of the channel. There are various expected scenarios, for example, a single RIS being deployed on a wall to indicate a signal coming from a predetermined direction.

The use of the RIS can provide a 'transmission effect' of a gNB signal that allows external signal to be transmitted into the building, and a coverage for a shaded area can be improved by providing a 'reflection effect' of an NLoS environment.

**Network-Controlled Repeater (NCR) of NR**

Existing RF Repeater

An RF repeater is a non-regenerative relay node that simply amplifies and forwards everything it receives. The main advantages of the RF repeaters are their low cost, ease of deployment, and not increasing latency. The main disadvantage of the RF repeaters is that they can amplify signals and noise to contribute to an increase in interference (contamination) of the system.

Release (Rel)-17 Work Item (WI) of RF Repeater (RAN4)

The RF repeater is specified in Rel-17 of RAN4 for a frequency range 1 (FR1) frequency division duplex (FDD)/time division duplex (TDD) and a frequency range 2 (FR2) band. The Rel-17 WID contains only RF requirements. The RAN4 work item description (WID) (RP-210818) specifies that it is assumed that the RF repeater does not perform adaptive beamforming toward a UE.

NCR for Rel-18 NR

Coverage is a basic aspect of cellular network deployment. When deployed, mobile operators rely on various types of network nodes to provide blanket coverage. The deployment of regular full-stack cells is one option but is not always possible (e.g., without backhaul availability) or is not always economically viable.

As a result, a new type of network node has been considered to increase the network deployment flexibility of the mobile operator. For example, integrated access and backhaul (IAB) has been introduced in Rel-16 and enhanced in Rel-17 to a new type of network node that does not require wired backhaul. Another type of network node is an RF repeater that simply amplifies and forwards all signals it receives. The RF repeaters have been widely deployed to complement the coverage provided by regular full-stack cells in 2G, 3G and 4G. In Rel-17, RAN4 has specified RF and electromagnetic compatibility (EMC) requirements for RF repeaters for NR targeting both FR1 and FR2.

The RF repeaters provide a cost-effective means of extending network coverage. However, the RF repeaters have limitations in simply performing amplification and forwarding operations without considering various factors that can improve performance. These factors may include information for semi-static and/or dynamic downlink/uplink configurations, adaptive transmitter/receiver spatial beamforming, ON-OFF states, and the like.

Compared to the existing RF repeater, the NCR improves a function of receiving and processing side control information. The side control information enables a network control repeater to perform amplification and forwarding operations in a more efficient manner. Potential advantages may include mitigation of unnecessary noise amplification, better spatial directivity transmission and reception, and simplified network integration.

The study of NCR for NR focuses on the following scenarios and assumptions. The NCR is an in-band RF repeater used to extend a network range in the FR1 and FR2 bands, and the FR2 deployment during the study may be prioritized for both outdoor and outdoor to indoor (O2I) scenarios. It corresponds only to a single hop stationary NCR. The NCR is transparent to the UE. The NCR may simultaneously maintain a base station (gNB)-repeater link and a repeater-UE link. Here, cost efficiency is a key consideration for the NCR.

In RAN1, there is a study and identification of whether the following side control information, including a maximum transmission power assumption, is needed for the NCR. That is, there is a study and identification of whether side control information such as beamforming information, timing information for aligning transmission/reception boundaries of the NCR, uplink-downlink TDD configuration information, On-Off information for efficient interference management and energy efficiency enhancement, and power control information (as a second priority) for efficient interference management is needed for the NCR. In addition, the RAN1 has a study and identification of L1/L2 (layer 1/layer 2) signal (including configuration of L1/L2) for transmitting the side control information.

RAN2 and RAN3 have a study on identification and authentication of the NCR. Here, coordination with SA3 may be necessary. The network-controlled repeater (NCR) may consist of an RU and a MT.

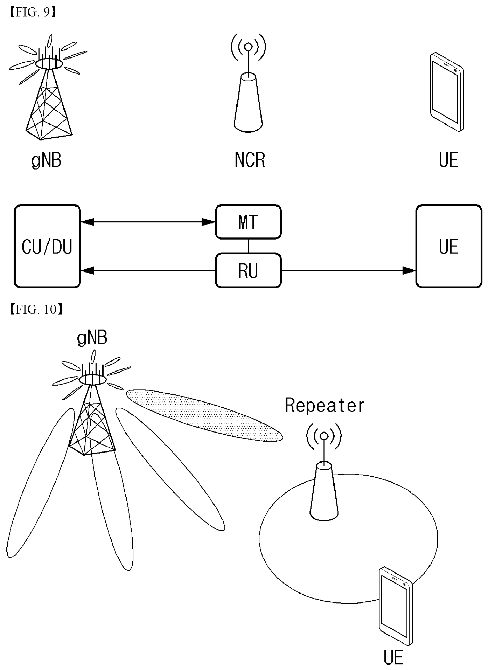

FIG. 9 illustrates an example of a topology in which an NCR performs transmission and reception between base station and a UE.

In FIG. 9, the base station may include a CU and/or a DU, and the NCR may be connected to the base station. The NCR may consist of a mobile terminal (MT) and an RU.

The RU may consist of only an RF layer. The RU may receive a signal sent by the base station at an RF end and transmit the signal to the UE, and the RU may receive a signal sent by the UE at the RF end and transmit the signal to the base station. The RU only transmits the signal between the base station and the UE, but cannot itself generate signal/channel and transmit it to the base station/UE or receive signal/channel from the base station/UE and search for it. The RU may consider adjusting the transmit/receive beam direction, downlink/uplink direction, whether it is On/Off, transmit power, etc., at the RF end, in order to transmit the received signal. However, such an operation of the RU cannot be determined by the NCR itself, and may be entirely controlled by the base station.

The MT may include an RF layer and L1, L2 and/or L3 layers. For example, the MT may include the RF layer and the L1 layer or the L1/L2 layer, or the MT may include the RF layer and the L1/L1/L3 layer. The MT may search/receive the signal/channel transmitted by the base station, and the MT may generate and transmit the signal/channel transmitted to the base station. The MT may receive information (i.e., side control information) required to control an operation of the RU from the base station. The MT does not perform transmission/reception with the UE.

When compared to the existing RF repeater, the NCR can operate as follows.

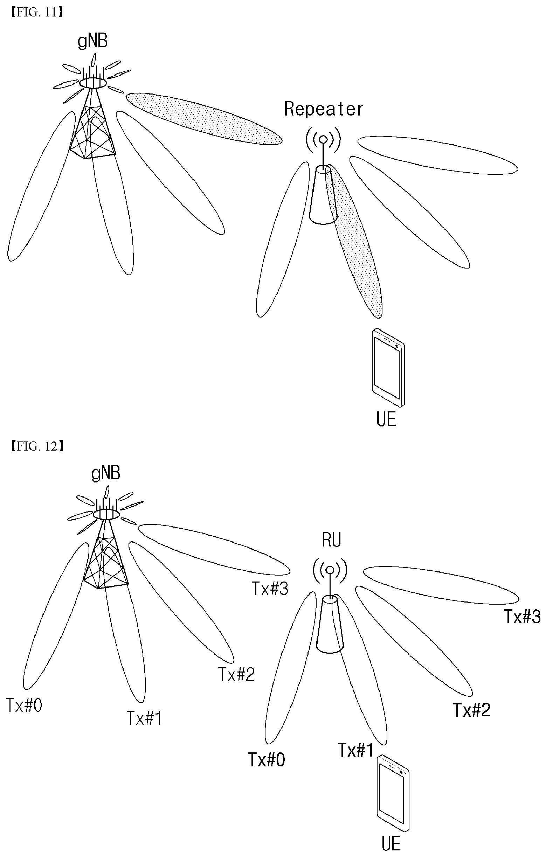

FIG. 10 illustrates an example of a beamforming operation of an existing RF repeater. FIG. 11 illustrates an example of a beamforming operation of an NCR.

Referring to FIGS. 10 and 11, the existing RF repeater performs beamforming applying an omni-direction or a fixed direction, as illustrated in FIG. 10. On the other hand, the NCR can obtain a beamforming gain by adaptively adjusting a transmit/receive beam direction of the NCR based on a location of the UE and channel conditions of the UE, as illustrated in FIG. 11.

The existing RF repeater cannot distinguish downlink and uplink directions in a TDD system and always performed simultaneously transmission and reception in the downlink direction and the uplink direction. Alternatively, the existing RF repeater applies only a fixed TDD configuration to perform switching between the downlink direction and the uplink direction in a given time pattern. On the other hand, the NCR may perform downlink/uplink switching in consideration of the TDD configuration. Hence, this enables adaptive downlink/uplink operation and can reduce power waste and interference caused by transmitting unnecessary signals.

The existing RF repeater always amplifies and forwards the power of a received signal regardless of whether the base station and the UE transmit signals. Hence, this unnecessarily wastes the power and increases the interference to the surroundings. The NCR may perform the On/Off operation to turn off the operation of the RU when there is no signal to transmit to the base station/UE, thereby not transmitting unnecessary signals.

The existing RF repeater amplified and forwarded the power of the received signal at a fixed ratio. On the other hand, an influence of interference on the surroundings can be reduced by reducing the transmission power of the NCR when the signal is transmitted with unnecessarily large power, thereby reducing, and the signal can be stably transmitted to the receiver by increasing the transmission power of NCR when the signal is transmitted with low power.

The existing RF repeater operates without knowing downlink/uplink slot boundaries. On the other hand, the NCR shall know transmission/reception boundaries of the downlink and uplink in order to adaptively adjust the beamforming, the on/off, the downlink/uplink direction, the transmission power, etc. as described above. Through this, the NCR can differently apply the operation of the RU per unit time (e.g., slot or symbol).

Based on this discussion, the present disclosure proposes a method for determining and configuring/indicating transmit/receive beam indices required for performing adaptive beamforming in an access link between an RU and a UE of an NCR.

In the present disclosure, an operation in the NCR is assumed. However, the present disclosure may be applied to a device other than the NCR. In particular, contents of the present disclosure may be applied for an operation of an RIS. To this end, the NCR mentioned in the present disclosure may be replaced with the RIS, and extended/interpreted. In this case, the RU may serve to forward a signal from the base station to the user equipment and serve to forward a signal from the user equipment to the base station, and an MT may serve to receive side control information for controlling transmission of the signal of the RU from the base station. In the present disclosure, the network may be replaced and interpreted as the base station or a CU/DU. Further, the base station may be replaced and interpreted as the network or CU/DU.

In the present disclosure, the network may be replaced and interpreted as a gNB or CU/DU. Further, the gNB may be replaced and interpreted as a network CU or DU.

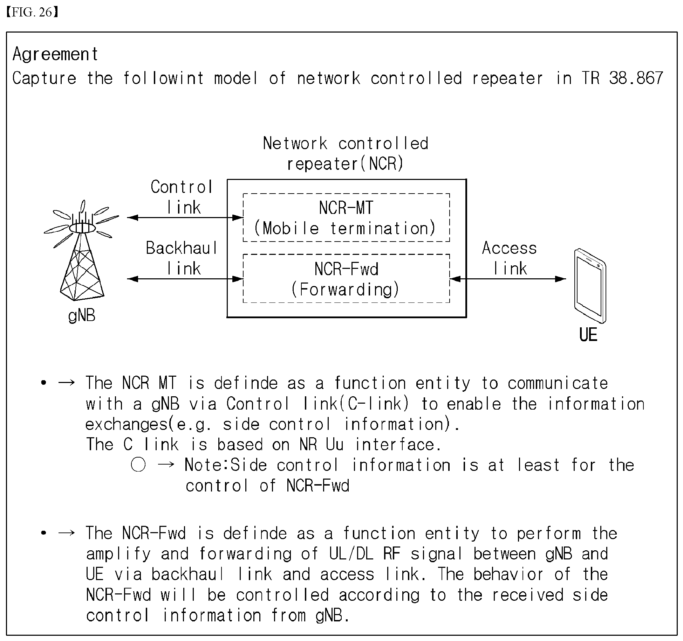

FIG. 26 is a diagram for modeling and a terminology for the NCR.

A RAN1#109-e standardization meeting agreed to insert some new definitions of the modeling and terminology for the NCR as illustrated in FIG. 26 into TR 38.867.

Referring to FIG. 26, NCR-RU, which is expressed as the RU of the NCR in a study item (SID), is agreed to change the terminology to NCR-Fwd during the RAN1#109-e standardization meeting. Therefore, in the present disclosure, the RU may be interpreted as replacing the existing NCR-RU and the agreed NCR-Fwd. In addition, according to the agreement, a link between the gNB and the NCR-MT in the present disclosure may be defined or interpreted as a control link or c-link, a link between the gNB and the NCR-Fwd may be defined or interpreted as a backhaul link, and a link between the NCR-Fwd and the UE may be defined or interpreted as an access link.

The NCR enables more intelligent control of an RU operation, going beyond the limitations of existing repeaters that simply amplify and transmit signals. To this end, the MT is newly introduced. By transmitting and receiving side control information between the gNB and the MT, controlling the RU operation may be possible. As a result, compared to an existing repeater, the NCR has a feature of being able to perform adaptive beamforming in the RU-UE link using the side control information. However, as the cost-efficiency of the NCR emerges as an important factor, it may be difficult for the MT to have a complete control capability like the gNB.

That is, there is a feature that the determination of the gNB must be followed in order to perform adaptive beamforming for transmission and reception of the RU in the RU-UE link where the NCR is installed. More specifically, a direction of the transmit beam applied by the RU when the RU transmits the signal received from the gNB to the UE, and a direction of the receive beam applied by the RU when the RU transmits the signal received from the UE to the gNB may be both determined by the gNB, and information for which transmit/receive beam the RU will actually apply may be provided to the MT as the side control information from the gNB.

In the NCR, in order to forward the signal received by the RU, it may be considered to adjust the transmit/receive beam direction, DL/UL direction, on/off, transmission power, etc. at the RF end. However, the operation of the RU may not be determined by the NCR itself and may be entirely controlled by the gNB. To this end, the MT may receive information required to control the operation of the RU (i.e., side control information) from the gNB. The side control information may be delivered through an L1/L2 signaling such as MAC-CE or DCI.

For example, the side control information may include all or some of the following information.

1) Beamforming information

Information for Tx/Rx beam direction of RU

This information may include a beam direction for UL Tx to the gNB, DL Rx from the gNB, DL Tx to the UE, or UL Rx from the UE.

2) Timing information for matching transmit and receive boundaries of NCR

Information for RU to match Tx and Rx slots or symbol boundaries

3) Information for DL-UL TDD configuration

This information may include information for a DL/UL direction of the RU.

4) On-off information for efficient interference management and enhanced energy efficiency

This information may include information for an on-off operation of the RU.

5) Power control information for efficient interference management

This information may include information for a Tx power of the RU, and the information for the Tx power of the RU may include information for a UL Tx power from the RU to the gNB or information for a DL Tx power from the RU to the UE.

In this case, it is necessary to define which beam direction or index of the actual RU the beamforming information received by the MT through the side control information from the gNB indicates.

When performing the adaptive beamforming in the RU-UE link, the side control information of the MT may be utilized to indicate the direction of the transmit and receive beams of the RU. The present disclosure proposes a method for determining which beam THE side control information indicates in the access link transmission and reception of the RU.

FIG. 12 is a diagram illustrating an example of a Tx beam direction operated by a gNB and a Tx beam direction operated by an RU according to an embodiment of the present disclosure.

FIG. 12 may be a diagram illustrating an example of a Tx beam direction operated by the gNB and a Tx beam direction operated by the RU in an NCR topology of a single hop between gNB-NCR-UE according to an embodiment of the present disclosure.

Referring to FIG. 12, the gNB may operate four Tx beams (NFH = 4), and the RU may operate four Tx beams (NAC = 4). In FIG. 12, the RU may receive a DL signal from the gNB using the Tx beam of Tx#3 of the gNB, and the UE may receive a DL signal from the RU using the Tx beam of Tx#1 of the RU.

The beam pair of the gNB-MT link or the gNB-RU link may be fixed and configured at an implementation step or determined through a beam adaptation operation between the gNB and the MT. In this case, the method for determining and transmitting the transmit/receive beam of the RU for the RU-UE link may be as follows.

First step: Information for the number of transmit/receive beams of the RU (NAC) may be reported to the gNB. In this case, an NAC value may be reported to the gNB by the MT.

Second step: The gNB may determine beam index information that the RU will actually transmit and receive, and indicate the determined beam index information to the MT. The gNB may transmit, to the MT, side control information including the beam index information that the RU will actually transmit and receive. The gNB may be indicated with the beam index information that the RU will actually transmit and receive. The gNB may receive, from the gNB, the side control information including the beam index information that the RU will actually transmit and receive.

Third step: The MT may perform transmission and reception by applying the beam direction of the RU based on the indicated information.

The MT may be possible to perform the adaptive beamforming of the RU by assisting in controlling the gNB through the side control information. However, in this case, there is no configuration as to whether the MT should be indicated with the transmit/receive beam index. Therefore, the present disclosure proposes a method for the MT to determine an RU transmit/receive beam index of the RU-UE link in the procedure and a method for the MT to be indicated an actual transmit/receive beam index of the RU.

Depending on a performance of the NCR, when the NCR includes a multiple antenna array configuration, multi-beam operation/transmission/reception may be expected to transmit simultaneously via a plurality of beam indices on the access link of the NCR. Here, the multi-beam operation/transmission/reception may mean that the RU performs DL transmission or UL reception by using multiple beams all at once at a specific time as the access link. Therefore, when the NCR considers a situation in which multiple beams are transmitted and received on the access link of the RU, a method for reporting capability information of the NCR related thereto (i.e., the number of beam indices of the access link, the type of each beam index of the access link, or a combination of multiple beams of the access link) and a method for indicating multiple beam transmission and reception on the access link of the RU based on this information are proposed. In the present disclosure, the access link may mean a transmission/reception link between the RU and the UE.

Additional advantages, objects, and features of the present disclosure will be set forth in part in the description which follows, and in part will become apparent to those skilled in the art by examination of the following, or may be learned from the embodiments of the present disclosure. The objects and other advantages of the present disclosure may be realized and attained by the structures particularly pointed out in the described description and claims as well as in the accompanying drawings.

The configuration, operation and other features of the present disclosure will be understood by the embodiments of the present disclosure described with reference to the accompanying drawings.

5.1 Method for reporting transmit/receive beam information of RU to gNB on access link

The gNB should know the information for the transmit/receive beam index of the RU in order to control the adaptive beamforming of the access link. The information for the beam index may include information for a direction of a beam for each beam index or the number of beams supported by the RU (NAC). At this time, the information for the transmit/receive beam direction of the RU for each beam index may be processed by implementation of the NCR or an operation, administration, maintenance (OAM) configuration. The number of transmit/receive beam indices of the RU (NAC) may be assumed to be known by the implementation in an NCR installation step. Otherwise, the MT may need to report the NAC value for the gNB to determine the number of beams supported by the RU. To this end, it is proposed that the MT reports, to the gNB, the information for the number of beams (NAC) supported by the RU. More specifically, the information for the number of beams (NAC) may be reported to the gNB by including the information for the number of beams (NAC) in a radio resource control (RRC) signaling, MAC-control-element (CE) or uplink control information (UCI) of a physical uplink control channel (PUCCH).

Method 1: The NAC value is included and reported through the RRC signaling.

Method 2: The NAC value is included in the MAC-CE, and reported.

The MT configures a logical channel ID (LCID) that the MT may report (i.e., an existing reusable LCID or a new LCID for the NCR) through an RRC parameter definition for the NCR operation (e.g., NumOfCandidateBeamIndex-NCR), and then reports a payload of the MAC-CE field including the NAC value to the gNB.

Method 3: The NAC value is included in a UCI field, and reported through the PUCCH.

In this case, the MT may not use the settings of higher layer parameters, and there is an advantage that the MT may dynamically report, which is limited in its capability in terms of cost-efficiency. This may be effective when the information for the number of transmit/receive beam indices of the RU may change depending on the time, for example, when the transmit/receive beams of the RU are frequently reconfigured due to channel instability between the gNB and the NCR.

At this time, the MT may independently report, to the gNB, the number of beams for DL Tx and the number of beams for UL Rx as the number of beams supported by the RU (NAC). Further, when the NCR includes the multi-antenna array configuration, the capability of the NCR for multi-beam transmission/reception of the access link may be reported to the gNB. In this case, the capability of the NCR may include the following information including the number of beams supported by the RU in the access link.

Capability of NCR for multi-beam DL Rx/UL Rx in NCR-RU

1. Number of beam indices (NAC) in the access link
2. Beam type for each beam index (a degree of beam width for each beam index, e.g. 0, 1, 2, or 3)
3. Access link multi-beam information (multi-beam set, beam index combination)

In particular, it may be impossible for an RU that simply performs amplify-and-forward or relay to make its own judgment or determination. In order for the RU to perform multi-beam transmission and reception, information for the multi-beams which the RU is able to use needs to be reported to the gNB. The MT may report the capability of the RU to the gNB.

The MT may report, to the gNB, the capability of the RU including RRC/MAC-CE signaling or a UCI field of the PUCCH as in Methods 1 to 3 above.

It may be assumed that the number of beam indices of the access link (NAC) (i.e., 1. the number of bema indices in the access link (NAC) described above) is the same as the number of applicable beam indices of the RU used in single beam transmission and reception (NAC). Meanwhile, in order for the RU to perform multi-beam transmission and reception in the access link, a plurality of beam indices need to be appropriately selected or reported so that there is no problem in beam forming between multi-beam indices that are used simultaneously at a specific time.

When this is specifically described, a beam width used for each beam index in configuring the multi-beam may be different, and a multi-beam combination needs to be configured within a range that does not cause a problem in transmission. For this purpose, for NAC beam indices, beam type information (i.e., 2. Beam type of each beam index described above) and configurable multi-beam information (i.e., 3. Access link multi-beam information) may be reported. In particular, a beam width in which multiple beams may be physically beamformed at a specific time may be limited, and information may be needed as to whether the beam type of each beam index is a narrow beam or a wide beam.

For example, in the case of a beam index whose beam type is a wide beam, it may be difficult to form a multi-beam by combining a plurality of beam indices, but in the case of a beam index whose beam type is a narrow beam, it may be relatively easy to form a multi-beam by combining the plurality of beam indices. From this perspective, the beam type may be expressed by digitizing a degree of a beam width. For example, through 1 bit of information, the narrow beam may be expressed with 0 and the wide beam may be expressed with 1, i.e., the beams may be expressed in two steps, or by subdividing the beam width, through 2 bits of information, a narrowest beam may be expressed with 1 and a widest beam may be expressed with 3, i.e., the beams may be expressed stepwise in four steps.

When beam type information for each beam index exists as described above, information related to a plurality of multi-beams (i.e., 3. Access link multi-beam information described above) may be configured for multi-beam transmission and reception. In this case, the configuration information may include a combination of multi-beams or a total number of multi-beams. The combination of the multi-beams may be a configuration of a plurality of beam indices capable of multi-beam transmission and reception by considering beam type (i.e., beam width) information of each beam index for the beam indices of $N_{AC}$ access links. The combination of the plurality of beam indices may be defined as a multi-beam set.

The total number of multi-beams ($L_{max}$) may mean a maximum number of plurality of beam indices that the NCR may constitute as the multi-beam set. In this case, $L_{max}$ may be computed by reflecting a weight of a beam type for each beam index. In this case, in order to avoid a problem with multi-beam transmission and reception in the access link, the beam type of each beam index constituting the multi-beam set may need to be the narrow beam. Alternatively, in low-cost NCRs where implementation limitations may exist, $L_{max}$ may be computed simply as the maximum number of possible combinations of beam indices, without considering the beam type of each beam index. The MT may configure a multi-beam set usable by the RU as a list by considering the multi-beam set or total number of multi-beams ($L_{max}$). The MT may report multi-beam set list information to the gNB. In this way, information configured by a list of the multi-beam set based on the multi-beam set for which the RU is capable of multi-beam transmission/reception or the total number of multi-beams (Lmax) may be referred to as the access link multi-beam information (3. Access link multi-beam information described above).

For example, if $N_{AC} = 6$, and each beam index is assumed to be beams #0 to 5, and each beam index has a beam type from the narrow beam width = 1 to the widest beam width = 4, a multi-beam set considering the weights of the beam types may be expressed in a form such as beam #0 = 1, beam #1 = 1, beam #2 = 2, beam #3 = 2, beam #4 = 3, and beam #5 = 3.

The MT may configure a multi-beam set composed of a combination of a plurality of beam indices capable of performing multi-beam transmission and reception as based on the beam information of such RU. Here, the multi-beam set may be configured within a range where no problem occurs when the RU transmits and receives multiple beams as described above, i.e., within a limit where beamforming is physically possible.

For example, if $N_{AC} = 6$, and each beam index is assumed to be beams #0 to 5, and each beam index has a beam type from narrow beam width = 1 to widest beam width = 4, and $L_{max}$ (i.e., total beam width) is 4, which enables the RU to transmit and receive multi-beams without any problem in the access link, possible multi-beam sets may include {beam#0, beam#1}, {beam#0, beam#2}, {beam#0, beam#4}, {beam#0, beam#1, beam#2}, etc., through which the RU may be capable of normally transmitting and receiving multi-beams. On the other hand, combinations such as {beam#2, beam#4} and {beam#4, beam#5} may not be composed of a list of multi-beam sets because their beam widths exceed $L_{max}$

As described above, a combination of beam indices that appropriately consider the beam type, i.e., a multi-beam set list from which multi-beam transmission and reception may be normally expected, may be included in the capability of the NCR and reported. In this case, there may be no limit in the number of multi-beam set that may be configured as a list, but depending on the performance of the NCR, the number of multi-beam sets that may be configured as the list may be limited to $N_{AC}$, etc. This may vary depending on the implementation of the NCR.

5.2 Method for being indicated with actual transmit/receive beam of RU in access link

Based on the transmit and receive beam information of the RU reported through the above-described side control information, the gNB may determine the beam index which the RU will use for actual transmission and reception, and configure and indicate the determined beam index.

A method may be proposed for a case where the number of indices of candidate transmit/receive beams ($N_{AC}$) is not large enough to allow dynamic indication, and for a case where $N_{AC}$ is large enough to cause indication overhead. The beam information proposed in the present disclosure may include at least one of information for the DL Tx beam of the RU or information for the UL Rx beam of the RU. Further, the beam index may include at least one of the DL Tx beam index of the RU or the UL Rx beam index of the RU.

Method 1: The gNB may dynamically indicate an operating beam index of the RU determined by the gNB to the RU through the MT. The gNB may dynamically indicate the operating beam index of the RU to the RU through the side control information. The beam index may be indicated within the number of beams supported by the RU ($N_{AC}$) For example, for each transmission slot, the number of bits that may express the number of transmit/receive beam indices ($N_{AC}$) through the DCI field of the PDCCH may be allocated and indicated (e.g., 2 bits when $N_{AC} = 4$). The side control information may be transmitted via the MAC-CE or PDCCH. For NCR, for purposes such as cost efficiency, it may be worth considering operating only a smaller number of beams compared to the gNB. In this case, since the number of beams supported by the RU is relatively small, it may be less burdensome to dynamically indicate which beam to use among the beams supported by the RU.

Method 2. The gNB configures a candidate beam set for transmission/reception of the RU to the MT, which consists of a number of beams less than or equal to $N_{AC}$ (= M), and then the gNB indicates, to the MT, the index of the transmit/receive beam of the RU among the M transmit/receive candidate beams.

When supporting a high-performance NCR, it may be considered that a large number of beams are operated, and in this case, since the number of beams supported by the RU is large, dynamically indicating which beam the RU will use among the beams supported by the RU may be burdensome in terms of signaling overhead.

In Method 1 described above, if a value of $N_{AC}$ is not enabled to be processed with a small number of bits, overhead may occur when executing the indication dynamically. A transmit/receive beam set consisting of M beams may be configured, and actual transmit/receive beam indices may be indicated within this set. At this time, a value of M ($\leq N_{AC}$) may be selected or defined by the gNB as best beams for the RU to transmit and receive through channel measurement between the gNB and the UE, and may be set through the RRC signaling.

For this operation, the present disclosure first proposes that the gNB configures information for a candidate beam set used by the RU to the MT. To this end, the gNB may configure, to the MT, information for M candidate beams which may be used by the RU among the $N_{AC}$ RU beams.

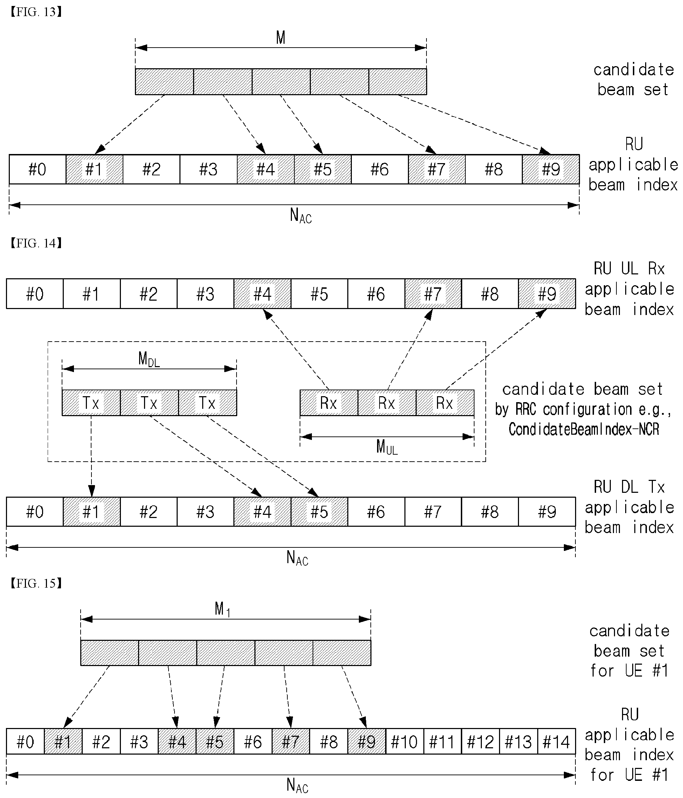

FIG. 13 is a diagram illustrating an example of an association between a transmit/receive beam set and a transmit/receive beam set index according to an embodiment of the present disclosure.

Referring to FIG. 13, M transmit/receive candidate beam sets may be associated with actual transmit/receive beam indices of the RU. The actual transmit/receive beam index of the relevant RU may be set for each candidate beam index for M transmit/receive candidate beam sets.

The gNB may configure the transmit/receive beam set of the RU to the MT through the MAC-CE or RRC signaling. As described above, the gNB may configure the transmit/receive beam set of the RU to the best beams for transmission and reception among the $N_{AC}$ beams. The candidate beam set may be represented as in Equation 1 below.

[Equation 1]

$$S= \{s_1, \ s_2\cdots, \ s_M\}$$

In Equation 1, S may be a candidate beam set, and M may be the number of candidate beam sets. $N_{AC}$ beam indices may be represented as in Equation 2 below.

[Equation 2]

$$d_{AC}= \{\#0, \ \#1,\cdots,\#N_{AC}-1\}$$

In Equation 2, $d_{AC}$ may be a beam index. The gNB may associate and configure the beam set selected or determined by the gNB and the actual transmit/receive beam index. For example, when M = 5 and $N_{AC}$ = 10 as in FIG. 13, the candidate beam set and beam index may be represented as in Equations 3 and 4 below.

[Equation 3]

$$S= \{s_1, \ s_2, \ s_3, \ s_4, \ s_5\}$$

[Equation 4]

$$d_{AC}= \{\#0, \ \#1, \ \cdots, \ \#9\}$$

For example, the gNB may map the candidate beam set of Equation 3 and the beam index of Equation 4 as shown in Equation 5 below.

[Equation 5]

$$\{s_1-\#1, \ s_2-\#4, \ s_3-\#5, \ s_4-\#7, \ s_5-\#9\}$$

In this case, the number of candidate beams and the configuration of the candidate beams may be set differently for each of the DL Tx beam and the UL Rx beam.

Additionally, it is proposed that the gNB configures, to the MT, information for a beam to be actually applied among the candidate beam sets. To this end, the gNB may indicate, to the MT, information for the beam to be actually applied among the candidate beam sets. The gNB may transmit, to the MT, side control information including the information for the beam to be actually applied among the candidate beam sets. The gNB may transmit the side control information to the MT via the MAC-CE or PDCCH.

The MT may receive, from the gNB, the side control information including the information for the beam to be actually applied among the candidate beam sets. The MT may determine the actual transmit/receive beam of the RU based on the information for the beam to be actually applied among the candidate beam sets and a preconfigured table. The preconfigured table may be a table in which candidate beam indices and beam index information to be actually applied.

Further, a two-step beam indication may be proposed. In this case, it can be assumed that the transmission of the side control information consists of the transmission of the side control information via the MAC-CE (step 1) and the transmission of the side control information via the PDCCH (step 2). In this case, the transmit/receive beam set may be configured through the side control information transmitted via the MAC-CE, and an association between the transmit/receive beam set and the actual transmit/receive beam index may be configured. Thereafter, the transmit/receive beam index of the RU may be indicated through the side control information transmitted via the PDCCH.

Considering the procedure of Method 2 described above, the following method may be additionally introduced for the configuration and indication method for the DL Tx beam and the UL Rx beam of the RU.

Method 2-1. A candidate beam set for the DL Tx beam of the RU and a candidate beam set for the UL Rx beam may be independently configured (e.g., CandidateTxBeamIndex-NCR and CandidateRxBeamIndex-NCR), and indications for the DL Tx beam and the UL Rx beam may also be independently performed. Specifically, the candidate beam set for the DL Tx beam and the candidate beam set for the UL Rx beam may be expressed as $S_{DL}$ and $S_{LL}$ (wherein, the # of candidate beams is $M_{DL}$ and $M_{UL}$), respectively. The gNB may configure an association relationship between the actual DL Tx beam index or UL Rx beam index of each of the candidate beam set for the DL Tx beam and the candidate beam set for the UL Rx beam to the MT within the $N_{AC}$ value ($M_{DL}, M_{UL} \leq N_{AC}$), which is the number of transmit/receive beam indices of the RU. $M_{DL}$ and $M_{UL}$ may be best beams for RU to transmit and receive. The gNB may select $M_{DL}$ and $M_{UL}$. The gNB may configure $M_{DL}$ and $M_{UL}$ to the MT. The gNB may configure the association relationship, the $M_{DL}$, and $M_{UL}$ to MT described above via the RRC signaling or MAC-CE.

The gNB may indicate, to the MT, information for the DL Tx beam and information for UL Rx beam which the RU will actually apply through the side control information. In this case, the DL Tx beam may be selected or indicated within $S_{DL}$, which is the candidate beam set for the DL Tx beam, and the UL Rx beam may be selected or indicated within $S_{UL}$, which is the candidate beam set for the UL Rx beam.

Method 2-2: Candidate beams for the DL Tx beam and the UL Rx beam of the RU may be configured within one candidate beam set, and indications for the DL Tx beam and the UL Rx beam to be applied by the RU within the candidate beam set may be performed. A difference between the method and the candidate beam set configuration of Method 2-1 described above is that one candidate beam set includes both the information the DL Tx beam and the information for the UL RX beam of the RU. For example, through the RRC parameter such as CandidateBeamIndex-NCR, candidate beam sets for an optimal DL Tx beam and an optimal UL Rx beam of the RU may be configured, and an association between the candidate beam set for the optimal DL Tx beam and the optimal UL Rx beam of the RU and the actual transmit/receive beam index of the RU may be configured.

FIG. 14 is a diagram illustrating an example of a candidate beam set configuration and an association for a DL Tx beam and a UL Rx beam of an RU according to an embodiment of the present disclosure.

In FIG. 14, $M_{DL}$ and $M_{UL}$ may be 3, and $N_{AC}$ may be 10.

Referring to FIG. 14, the candidate beam set of the DL Tx beam may be associated with {#1, #4, #5} of the DL Tx beam indices of the RU, and the candidate beam set of the UL Rx beam may be associated with {#4, #7, #9} of the Rx beam indices of the RU. The gNB may indicate, to the MT, the information for the DL Tx beam and the information for UL Rx beam which the RU will actually apply through the side control information. In this case, a DL Tx beam to be applied by the RU may be selected or indicated among the candidate DL Tx beams included in the candidate beam set, and a UL Rx beam to be applied by the RU may be selected or indicated among the candidate UL Rx beams included in the candidate beam set.

Method 3: The gNB may set a plurality of candidate beam sets and configure associations between the plurality of candidate beam sets and actual transmit/receive beam indices. For example, when there are a plurality of UEs (e.g., C UEs) served by one NCR, the gNB may configure C candidate beam sets corresponding to the plurality of UEs, respectively, and determine or configure set the association of the actual transmit/receive beam indices for each UE. In this case, the beam indices that constitute the candidate beam set may overlap each other. That is, the gNB may configure the plurality of candidate beam sets to the MT. Each of the candidate beam sets may include a set index, and information for the set index may be configured together. Unlike this, each of the candidate beam sets may be associated with one or more UEs, and information for a UE identifier (ID) associated with each candidate beam set may be configured together. Unlike this, the information for the set index of the candidate beam set associated with each UE ID may be configured.

FIGS. 15 to 17 are diagrams illustrating an example of an association between a plurality of transmit/receive beam sets and actual transmit/receive beam set indices according to an embodiment of the present disclosure.

FIGS. 15 to 17 illustrate configuration examples of candidate beam sets according to UEs when candidate beam sets are configured differently for each of a plurality of UEs.

Referring to FIGS. 15 to 17, M1, M2, and M3 candidate beam sets may be configured for UE#1, UE#2, and UE#3, respectively. In FIGS. 15 to 17, it is illustrated that the beam indices of RUs constituting different candidate beam sets do not overlap each other, but, on the contrary, the beam indices of RUs constituting different candidate beam sets may overlap each other.

The gNB may transmit, to the MT, side control information including information for a beam index which the RU will actually apply. There may be a plurality of candidate beam sets for an RU, and indices of the candidate beam sets may need to be indicated together in order to indicate the beam index to be applied by the RU. That is, the gNB may indicate, to the MT, index and beam index information of the candidate beam set to be applied by the RU. In this case, when the candidate beam set is associated with the UE, the index of the candidate beam set may be replaced with the UE ID.

Based on the procedure in which the beam index to be applied by the RU is configured or indicated through the plurality of candidate beam sets, a method for configuring and a method for indicating the association between the DL Tx beam and the UL Rx beam of the RU as described below may be additionally considered.

Method 3-1: The gNB may independently configure candidate beam sets for the DL Tx beam and the UL Rx beam of the RU and independently indicate, to the MT, a DL Tx beam and a UL Rx beam to be used for actual transmission. More specifically, the gNB may configure a plurality of candidate beam sets for the DL Tx beam and a plurality of candidate beam sets for the UL Rx beam. The gNB may indicate, to the MT, the information for the DL Tx beam and the information for UL Rx beam which the RU will actually apply through the side control information. In this case, the gNB may select a DL Tx beam to be applied within the candidate beam set along with the information for the candidate beam set of the DL Tx beam to be applied for configuring the DL Tx beam, and indicate the selected DL Tx beam to the MT. Further, the gNB may select a UL Rx beam to be applied within the candidate beam set along with the information for the candidate beam set of the UL Tx beam to be applied for configuring the UL Rx beam, and indicate the selected UL Rx beam to the MT. As the information for DL and UL candidate beams is separately handled, a flexible configuration and a flexible indication not limited by a constitution of a specific beam pair may be possible.

Method 3-2: The gNB may configure a plurality of candidate beam sets, and may configure, within each candidate beam set, a plurality of candidate beams for the DL Tx beam and a plurality of candidate beams for the UL Rx beam. The gNB may indicate, to the MT, information for the DL Tx beam and the Rx beam which the RU will actually apply through the side control information. In this case, information for a candidate beam set to be applied to the RU may be indicated together.. That is, a DL Tx beam to be applied by the RU may be selected or indicated among the candidate DL Tx beams included in the candidate beam set, and a UL Rx beam to be applied by the RU may be selected or indicated among the candidate UL Rx beams.

Method 3-3: Considering the case where the method is performed by the unit of a beam pair, a subset configuration may be formed in a candidate beam set in a form of a pair of {DL Tx beam index, UL Rx beam index}, which may be configured to be associated with each other. The gNB may configure a plurality of candidate beam sets, and configure pair information of a plurality of candidates {DL Tx beam index, UL Rx beam index} for each candidate beam set. Here, the index of each candidate beam in the candidate beam set and the pair of {DL Tx beam index, UL Rx beam index} may be associated. The gNB may indicate, to the MT, the information for the DL Tx beam and the UL Rx beam which the RU will actually apply through the side control information. At this time, information for the candidate beam set to be applied to the RU and information for the candidate beam index may be indicated together. When the gNB indicates the information for the candidate beam set and the candidate beam index, a DL Tx beam index and a UL Rx beam index corresponding to a candidate beam index within the candidate beam set may mean indicate the DL Tx beam and UL Rx beam to be applied by the RU.

In the above-described methods, the information for the candidate beam set may mean an index of the candidate beam set. When the candidate beam set is associated with the UE, the information for the candidate beam set may mean a UE ID. Further, the configurations for Methods 3-1, 3-2, and 3-3 above may be performed by the gNB and provided to the MT via the side control information. The MT may indicate the beam index of the RU through the side control information in each proposed method provided.

The methods may be in a form of performing beam adaptation of the RU by mapping a single beam index and a candidate beam set of the RU, and directly indicating the single beam index of the RU at a specific time for DL Tx or UL Rx among all available beam indices ($N_{AC}$) of the RU. That is, the method may relate to a method for configuring or indicating an operation of the single beam index of the RU.

Meanwhile, when the NCR is implemented as a multi-antenna array, multi-beam transmission/reception of the RU access link may be expected at a specific time. In this case, it may be expected that the RU performs DL transmission over multiple beams simultaneously or performs UL reception over multiple beams simultaneously at a specific time. In order to perform multi-beam transmission and reception of the RU, each index of the candidate beam set may be extended to be mapped not only to a single beam index of the RU, but also to multiple beam indices of the RU. Thereafter, for multi-beam transmission/reception to the access link of the RU, a configuration/indication of the gNB related to a multi-beam operation may be required. In this case, the gNB may utilize NCR capability information including multi-beam related information reported from the MT. Further, the MT may receive a multi-beam transmission/reception configuration/indication from the gNB and apply the multi-beam transmission/reception configuration/indication to the RU. From this perspective, the method for configuring/indicating the multi-beam transmission/reception by the gNB may be proposed as follows.

Method 4: Configuring or indicating multi-beam transmission/reception in the access link of the RU based on A multi-beam set list of the NCR capability information

A method is proposed, in which the gNB configures or indicates the multi-beam transmission/reception based on the NCR capability information reported from the MT. An NCR capability may include the multi-beam set list for the access link of the RU. The multi-beam set list may mean a list enumerating combinations of a plurality of beam indices (i.e., multi-beam sets) of the RU access link capable of multi-beam transmission/reception. In this case, each of the multi-beam sets may be configured based on beam type information for each access link available beam index of the RU described above. For example, when all available beams ($N_{AC}$) in the access link of the RU are configured as {beam#0,1, ◎, #14} with $N_{AC}$ = 15, the multi-beam sets may be configured as set#0={beam#1, beam#3}, set#1={beam#5}, and set#2={beam#3, beam#4, beam#7}. That is, the multi-beam set may be defined as a combination that enables multi-beam transmission/-reception in a form of multiple beam indices as well as a single beam index. In this case, the gNB may configure a candidate beam set with best beams for transmission/reception among the beams included in the multi-beam set configured from the beam indices of $N_{AC}$ RU access links as described above through the MAC-CE or RRC signaling, and configure the candidate beam set to the MT.

The gNB may form a mapping relationship between a specific multi-beam set (i.e., single/multi-beam index of the RU) and a specific index of the candidate beam set. The multi-beam set and single/multi-beam indices described below may be interpreted with the same meaning. Methods 2 and 3 described above may consider that, unlike a case where each of the M indices of an arbitrary candidate beam set is mapped to a single beam index of the RU, the M indices of an arbitrary candidate beam set are mapped not only to the single beam index of the RU but also to the multiple beam indices. The mapping relationship between the single/multi-beam indices of the RU and indices within the candidate beam set may be as follows.

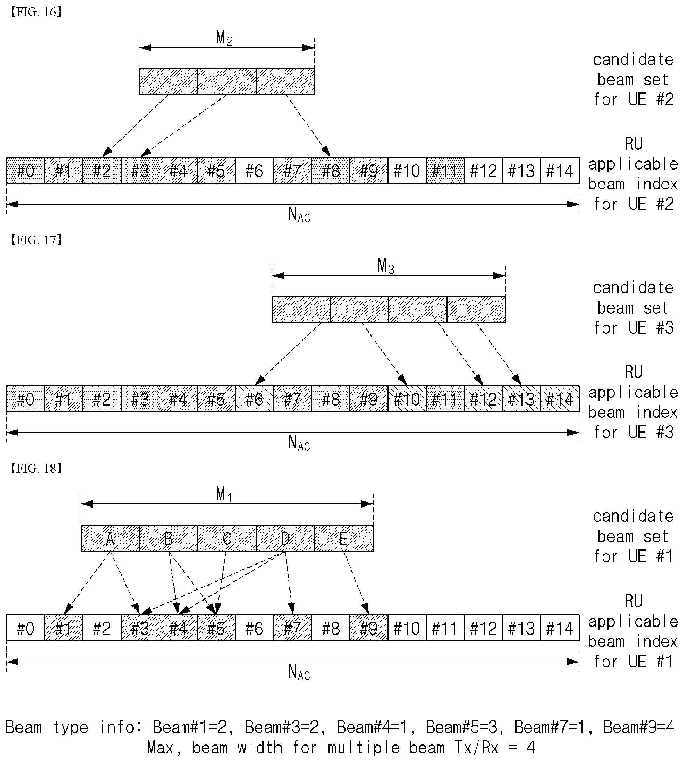

FIG. 18 is a diagram illustrating an example of an association between a candidate beam set and a multi-beam set according to an embodiment of the present disclosure.

FIG. 18 illustrates an example of a case where there is only one candidate beam set (i.e., a single user), and a plurality of candidate beam sets (i.e., multiple users) may be mapped in the same or similar form to the single/multiple beam index of the RU.

The candidate beam set and the multi-beam set may be represented as in Equations 6 and 7 below.

$$[Equation\ 6]$$

$$S = \{s_1,\ s_2,\ \cdots,\ s_M\}$$

$$[Equation\ 7]$$

$$k_{AC} = \{set\#0, set\#1, \cdots, set\#(N_{AC}-1)\}$$

In Equations 6 and 7, S may represent the candidate beam set, M may represent the number of candidate beam sets, $k_{AC}$ may represent the multi-beam set, and $N_{AC}$ may represent the number of multi-beam sets. The gNB may associate the candidate beam set and the multi-beam set in Equations 6 and 7, and configure the associated beam sets to the MT.

Referring to FIG. 18, assuming that there are beams #A to E as candidates that may perform transmission through candidate beam sets (M = 5), when the multi-beam set list for the access link of the RU included in the NCR capability information is configured as set#0 to set#4, and configured as set#0={beam#1, beam#3}, set#1 ={beam#3, beam#4, beam#7}, set#2={beam#4, beam#5}, set#3={beam#5}, and set#4={beam#9}, a mapping relationship in the form of candidate beam set index-multi-beam set index may be defined depending on the determination of the gNB. For example, a format such as beam#A-set#0, beam#B-set#2, or beam#D-set#1 may be a case where the index of the candidate beam set is associated with multiple beam indices. A mapping relationship between the index of the candidate beam set and a single beam index may be defined in a format such as beam#C-set#3 or beam#E-set#4. That is, a mapping between the index of the candidate beam set and the multi-beam set may be defined according to the determination of the gNB to enable not only a single beam of the RU access link but also the multi-beam operation. In particular, when the above-described mapping is performed, the beam type of the multi-beam indices configured in the multi-beam set may have to be a narrow beam. More specifically, when considering the beam type of the single/multiple beam index constituting the multi-beam set, the number of multi-beams constituting the multi-beam set must be equal to or less than the number of multi-beams ($L_{max}$) described above. There may be no multi-beam set larger than $L_{max}$, but even though the multi-beam set is reported by any error, the gNB may perform mapping only based on a multi-beam set smaller than or equal to $L_{max}$

In this case, the number of candidate beams and the configuration of the candidate beams may be set differently for each of the DL Tx beam and the UL Rx beam. Additionally, it is proposed that the MT is indicated with information for a beam to be actually applied among the candidate beam sets from the gNB. To this end, the gNB may indicate, to the MT, information for a beam index used by the RU among M RU candidate beams. The gNB may transmit, to the MT, side control information including the information for the beam index used by the RU among M RU candidate beams. The gNB may transmit the side control information to the MT via the MAC-CE or PDCCH. The MT may receive, to the gNB, the side control information including the information for the beam index used by the RU among M RU candidate beams. The MT may determine an actual transmit/receive beam of the RU based on the information for the beam index used by the RU included in the side control information, and a preconfigured table. Here, the preconfigured table may be a table in which candidate beam indices and actually applied beam index information are associated with each other. Here, the transmit/receive beam may be a single beam or multiple beams defined in the multi-beam set. The information may be transmitted via the MAC-CE or PDCCH.

For example, when a multi-beam set of the RU mapped to beam#A among the candidate beam sets defined by the gNB is {beam#1, beam#3}, beam#A may be indicated to the MT to be applied as the access link beam of the RU through the side control information. In this case, the actual access link beam of the RU mapped to beam#A may be beam #1 and beam #3, and the MT may apply those two beam directions as the access link beams of the RU.

For example, if the mapping relationship of the candidate beam set and the RU access link multi-beam set is constituted by beam#B-{beam#0, beam#1} and beam#C-{beam#2}, and beam#B is configured for DL Tx and beam#C is configured for UL Rx, beam#B may be indicated to the MT through the side control information to be applied as the access link beam. In this case, the RU may simultaneously perform DL transmission in two beam directions, beam#0 and beam#1, which are the actual access link beams of the RU. In contrast, when beam#C is indicated to the MT through the side control information to be applied as the access link beam, the RU may perform UL reception with beam#2 which is the actual access link beam of the RU.

Unlike this, a two-step beam indication may be proposed. To this end, it may be assumed that the transmission of the side control information consists of a transmission of the side control information via the MAC-CE (step 1) and a transmission of the side control information via the PDCCH (step 2). In this case, the candidate beam set may be configured through the side control information transmitted via the MAC-CE, and an association between the candidate beam set and the actual multi-beam set may be configured. Thereafter, the transmit/receive beam index of the RU may be indicated through the side control information transmitted via the PDCCH.

Based on the procedure in which the transmit/receive beam index of the RU is configured or indicated through the single or the plurality of candidate beam sets, a method for configuring and a method for indicating the association between the DL Tx beam and the UL Rx beam of the RU as described below may be additionally considered. In particular, the DL Tx beam and the UL Rx beam in the proposed method below may be interpreted as including both a single beam and multiple beams. Unlike this, the DL Tx beam to the UL Rx beam may be interpreted as DL Tx beams to UL Rx beams or a DL Tx multi-beam set to a UL Rx multi-beam set.

Method 4-1: Candidate beam sets for the DL Tx beam and UL Rx beam of the RU may be independently configured, and indications for the DL Tx beam and UL Rx beam to be used for actual transmission may also be independently performed. More specifically, the gNB may configure a plurality of candidate beam sets for the DL Tx beam and a plurality of candidate beam sets for the UL Rx beam.

The gNB may select a DL Tx beam to be actually applied by the RU from a plurality of DL Tx candidate beam sets. The gNB may indicate, to the MT, information for the plurality of DL Tx candidate beam sets and information for a DL Tx beam which the RU will actually apply. The gNB may transmit, to the MT, side control information including the information for the candidate beam set and the information for the DL Tx beam to be actually applied by the RU.

The gNB may select a UL Tx beam to be actually applied by the RU from a plurality of UL Tx candidate beam sets. The gNB may indicate, to the MT, information for the plurality of UL Tx candidate beam sets and information for a UL Tx beam which the RU will actually apply. The gNB may transmit, to the MT, side control information including the information for the candidate beam set and the information for the UL Tx beam to be actually applied by the RU. As the gNB handles information for DL and UL candidate beams, a flexible configuration and a flexible indication not limited by a constitution of a specific beam pair may be possible.

Method 4-2: A plurality of candidate beam sets may be configured, and within each candidate beam set, a plurality of candidate beams for the DL Tx beam and a plurality of candidate beams for the UL Rx beam may be configured. The gNB may indicate, to the MT, information for the DL Tx beam and the UL Rx beam which the RU will actually apply. In this case, at this time, information for a candidate beam set to be applied to the RU may be indicated together. That is, a DL Tx beam to be applied by the RU may be selected or indicated among the candidate DL Tx beams included in the candidate beam set, and a UL Rx beam to be applied by the RU may be selected or indicated among the candidate UL Rx beams. The gNB may transmit, to the MT, side control information including the information for the DL Tx beam and the UL Rx beam which the RU will actually apply. In this case, the side control information may further include information for the candidate beam set to be applied to the RU.

Method 4-3: Considering a case where the method is performed by the unit of a beam pair, a subset configuration may be formed in the candidate beam set in a pair form, which may be configured to be associated with each other. For example, the form of the pair may be {DL Tx beam index, UL Rx beam index}. That is, a plurality of candidate beam sets may be configured, and pair information of a plurality of candidates {DL Tx beam index, UL Rx beam index} may be configured for each candidate beam set. The index of each candidate beam in the candidate beam set may be associated with the pair of {DL Tx beam index, UL Rx beam index}. The gNB may indicate, to the MT, the information for the DL Tx beam and the UL Rx beam which the RU will actually apply. In this case, the information for the candidate beam set to be applied to the RU and the information for the candidate beam index may be indicated together. The gNB may transmit, to the MT, side control information including the information for the DL Tx beam and the information for the UL Rx beam which the RU will actually apply. In this case, the side control information may further include the information for the candidate beam set to be applied to the RU and the information for the candidate beam index. When the gNB indicates the candidate beam set information and the candidate beam index to the MT, a DL Tx beam index and a UL Rx beam index corresponding to a candidate beam index within the candidate beam set may be the DL Tx beam and UL Rx beam to be applied by the RU.

In the above-described methods, the information for the candidate beam set may mean an index of the candidate beam set. Further, when the candidate beam set is associated with the UE, the information for the candidate beam set may mean a UE ID. Further, the configurations for Methods 4-1, 4-2, and 4-3 above may be performed by the gNB and provided to the MT via the side control information. The MT may indicate the multi-beam set of the RU through the side control information provided according to each proposed method.

5.3 Method in which actual transmit/receive beam of RU is indicated based on reference signal (RS) ID in access link

The above-described beam indication is a transmit/receive beam index-based indication procedure for the MT newly introduced in the NCR, but there is nothing set for a method for indicating the actual transmit/receive beam through an RS ID based on an existing beam maintenance procedure and configuration.

Although the NCR may not fully know RS information received from the gNB, it is possible to consider a method for linking transmit/receive beam information of the RU to the RS ID and performing the beam indication based on the RSID. To describe it in detail, when beam management is performed in a topology environment, a method for assigning an RS ID corresponding to beams (i.e., beams through UE-NCR-gNB) reported through the access link among measurement reports of the UE may be considered. Here, the RS ID may mean an SSB resource ID (SSB resource ID (SSBRI)), CSI-RS resource ID (CSI-RS resource ID (CRI)), or TCI state ID (state ID) for DL Tx, and mean SRS resource ID (SRS resource ID (SRI)) for UL Rx from the RU's perspective. By using the RS ID, there is an advantage of being aligned with and responded to an existing beam management mechanism.

To this end, the beam index may be replaced and applied with the RS ID in the method of 5.2 described above. That is, the beam direction applied to the RU may be indicated by indicating the RS ID instead of the beam index. In this case, the beam direction of the RU corresponding to the RS ID may be resolved by 1) implementing the NCR or 2) the gNB may configure the beam index of the RU for each RSID. Specifically, the following method may be applied.

Method 1: For the NCR to determine the transmit/receive beam direction of the RU, the gNB may indicate the RS ID to the MT through the side control information. The MT may indicate the RS ID to the RU. The RU may be indicated with the RS ID from the MT, and the RU may perform beamforming through a transmit/receive beam with the RSID. In this case, the RS for the DL Tx beam of the RU corresponding to the access link may mean an SSB or a CSI-RS, and the RS for the UL Rx beam may mean an SRS. At this time, a direction of the transmit/receive beam of the RU corresponding to each RS ID may be assumed by the implementation of the NCR or an OAM configuration.

Method 2: The beam index may be configured for each RS ID, and the RS ID may be indicated via the side control information. For example, in DL transmission, when there are four SSB beam indices of the gNB (SSB#0 to SSB#3), four SSB beam indices of the RU (SSBRU#0 to SSBRU#3), and a beam configured through beam management in a front haul link is SSB#3, the beam of the access link passing through the NCR may be assigned with four indices as SSB#3-SSBRU#0 to SSB#3-SSBRU#3. In this case, at this time, the gNB may set an associated RS ID for each of the four beam indices of the access link and provide this information to the MT through the side control information.

In order for the NCR to determine the transmit/receive beam direction of the RU, the gNB may indicate the RS ID to the MT through the side control information. The MT may indicate the RS ID to the RU. At this time, the Tx/Rx beam index of the RU corresponding to each RS ID may be configured. In this case, the gNB may configure the Tx/Rx beam index information of the RU corresponding to each RS ID to the MT through the signaling such as the RRC or MAC-CE.

Method 3: The beam indices for each RS ID may be configured for a plurality of candidate beam sets, and the set indices and RS IDs may be indicated through the side control information. In the procedure of Method 2 described above, by extension to the plurality of candidate beam sets, the gNB may configure an associated RS ID and an index indicating which set is pointed for each RU transmit/receive beam index for each set. The gNB may provide the MT with side control information including an associated RS ID and an index indicating which set is pointed for each RU transmit/receive beam index for each configured set.

That is, the gNB may configure the plurality of candidate beam sets to the MT, each of the plurality of candidate beam sets may include a set index, and information for the set index may be configured together. Alternatively, each of the plurality of candidate beam sets may be associated with at least one UE, and information for a UE ID associated with each of the plurality of candidate beam sets may be configured together. Alternatively, in each of the plurality of candidate beam sets, the information for the associated UE ID may be together configured for each candidate beam set associated with at least one UE. Alternatively, information for the set index of the candidate beam set associated with each UE ID may be configured. At this time, an RU Tx/Rx beam index corresponding to each RS ID may be configured for each of the plurality of candidate beam sets. To this end, the gNB may configure the Tx/Rx beam index information of the RU corresponding to each RS ID to the MT through the signaling such as the RRC or MAC-CE for each of the plurality of candidate beam sets.

Thereafter, in order for the NCR to determine the transmit/receive beam direction of the RU, the gNB may indicate information for the candidate beam set applied to the RU and RS ID information to the MT. The information for the candidate beam set may mean an index of the candidate beam set. Alternatively, when the candidate beam set is associated with the UE, the information for the candidate beam set may mean a UE ID. The gNB may transmit, to the MT, side control information including the information for the candidate beam set applied to the RU and the RS ID information.

5.4 Method for applying beam of RU according to configured beam index or RS ID

Through the above-described method, the gNB may configure a DL Tx beam index (or RS ID) or a UL Rx beam index (or RS ID) to be applied by the RU in a specific time resource to the NCR. In this case, an actual beam direction of the RU corresponding to a specific beam index (or RS ID) may be determined as follows.

Alt 1. This may be an implementation issue of the RU and may be determined by the RU.

Alt 2. The beam direction is configured for each beam index (or RS ID) through the OAM configuration, etc.

In this case, the RU must perform transmission and reception by applying a same Tx/Rx beam direction in a configured time resource in order to apply a same Tx/Rx beam index (or RS ID).

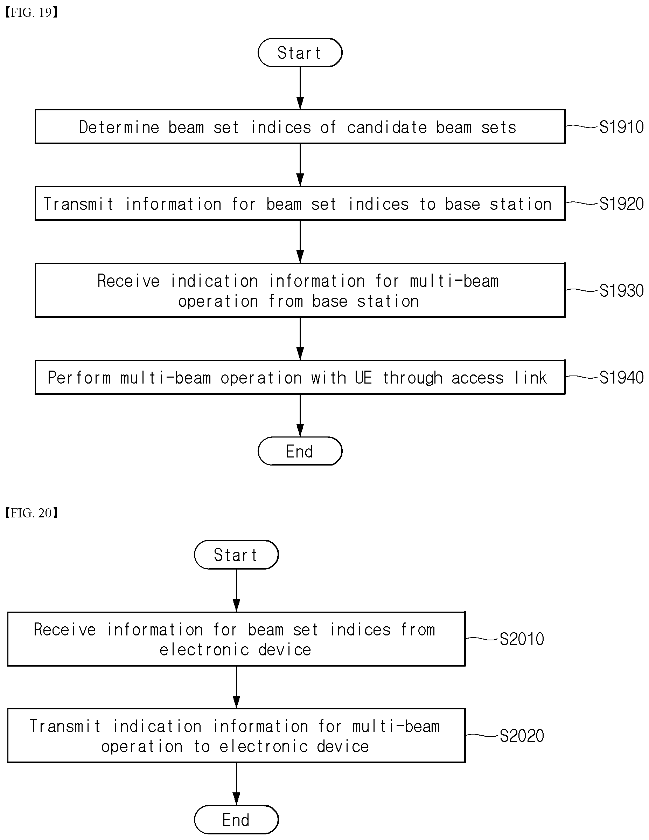

FIG. 19 is a diagram illustrating an embodiment of a signal transmission/reception method according to an embodiment of the present disclosure.

In FIG. 19, an electronic device may be the NCR described above.

Referring to FIG. 19, the electronic device may determine beam set indices of candidate beam sets (S1910). The electronic device may determine beam set indices of candidate beam sets constituted by a plurality of candidate beams for multi-beam operations performed simultaneously over an access link with the UE.

In an embodiment, candidate beam sets for downlink transmit beams and uplink receive beams between the electronic device and the UE may be independently configured.

In an embodiment, each of the candidate beam sets may include a plurality of candidate beams for the downlink transmit beams and a plurality of candidate beams for the uplink receive beams between the electronic device and the UE.

In an embodiment, each of the candidate beam sets may include a plurality of beam pairs of the downlink transmit beams and the uplink receive beams between the electronic device and the UE.

The electronic device may transmit information for beam set indexes of candidate beam sets to the base station (S1920). Further, the electronic device may transmit capability information of the electronic device to the base station. The capability information may include a number of indices for a plurality of candidate beams included in candidate beam sets, information for beam types of the indices for the plurality of candidate beams, and information for a multi-beam set in the access link, and the information for the beam types of the indices for the plurality of candidate beams may include information for beam widths of the indices for the plurality of candidate beams.

The electronic device may receive indication information for a multi-beam operation from the base station (S1930).

The electronic device may receive, from the base station, the indication information for the multi-beam operation based on at least one candidate beam set index among the beam set indices in S1910.

In an embodiment, when the candidate beam sets for the downlink transmit beams and the uplink receive beams between the electronic device and the UE are independently configured, the indication information may independently indicate the downlink transmit beams and the uplink receive beams.

In an embodiment, when each of the candidate beam sets includes the plurality of candidate beams for the downlink transmit beams and the plurality of candidate beams for the uplink receive beams between the electronic device and the UE, the indication information may include information for a downlink transmit beam and an uplink receive beam to be actually used within at least one candidate beam set.

In an embodiment, the indication information may be configured based on the information for the beam widths of the indices for the plurality of candidate beams and the information for the multi-beam set.

The electronic device may perform the multi-beam operation with the UE through the access link. The electronic device may perform the multi-beam operation through the access link with the UE based on at least one candidate bema set index.

Here, transmission and reception through the access link between the electronic device and the UE may be simultaneously performed through the multi-beam operation.

FIG. 20 is a diagram illustrating an embodiment of a signal transmission and reception method according to another embodiment of the present disclosure.

In FIG. 20, the electronic device may be the NCR described above.

Referring to FIG. 20, the bases station may receive, from the electronic device, information for beam set indices (S2010). The base station may receive, from the electronic device, information for the beam set indices of candidate beam sets constituted by a plurality of candidate beams for multi-beam operations performed simultaneously over an access link with the electronic device and the UE.

In an embodiment, candidate beam sets for downlink transmit beams and uplink receive beams between the electronic device and the UE may be independently configured.

In an embodiment, each of the candidate beam sets may include a plurality of candidate beams for the downlink transmit beams and a plurality of candidate beams for the uplink receive beams between the electronic device and the UE.

In an embodiment, each of the candidate beam sets may include a plurality of beam pairs of the downlink transmit beams and the uplink receive beams between the electronic device and the UE.

Further, the base station may receive, from the electronic device, capability information of the electronic device. The capability information may include the number of indices for the plurality of candidate beams included in the candidate beam sets, information for beam types of the indices for the plurality of candidate beams, and information for a multi-beam set in the access link.

The information for the beam types of the indices for the plurality of candidate beams may include information for beam widths of the indices for the plurality of candidate beams.

The base station may transmit indication information for a multi-beam operation to the electronic device (S2020). The base station may transmit, to the electronic device, the indication information for the multi-beam operation based on at least one candidate beam set index among the beam set indices.

The electronic device may receive, from the base station, the indication information for the multi-beam operation based on at least one candidate beam set index among the beam set indices in S1910.

In an embodiment, when the candidate beam sets for the downlink transmit beams and the uplink receive beams between the electronic device and the UE are independently configured, the indication information may independently indicate the downlink transmit beams and the uplink receive beams.

In an embodiment, when each of the candidate beam sets includes the plurality of candidate beams for the downlink transmit beams and the plurality of candidate beams for the uplink receive beams between the electronic device and the UE, the indication information may include information for a downlink transmit beam and an uplink receive beam to be actually used within at least one candidate beam set.

In an embodiment, the indication information may be configured based on the information for the beam widths of the indices for the plurality of candidate beams and the information for the multi-beam set.

Further, the multi-beam operation may be performed through the access link between the electronic device and the UE based on the at least one candidate beam set index.

Here, transmission and reception through the access link between the electronic device and the UE may be simultaneously performed through the multi-beam operation.

## Communication system applicable to the present disclosure

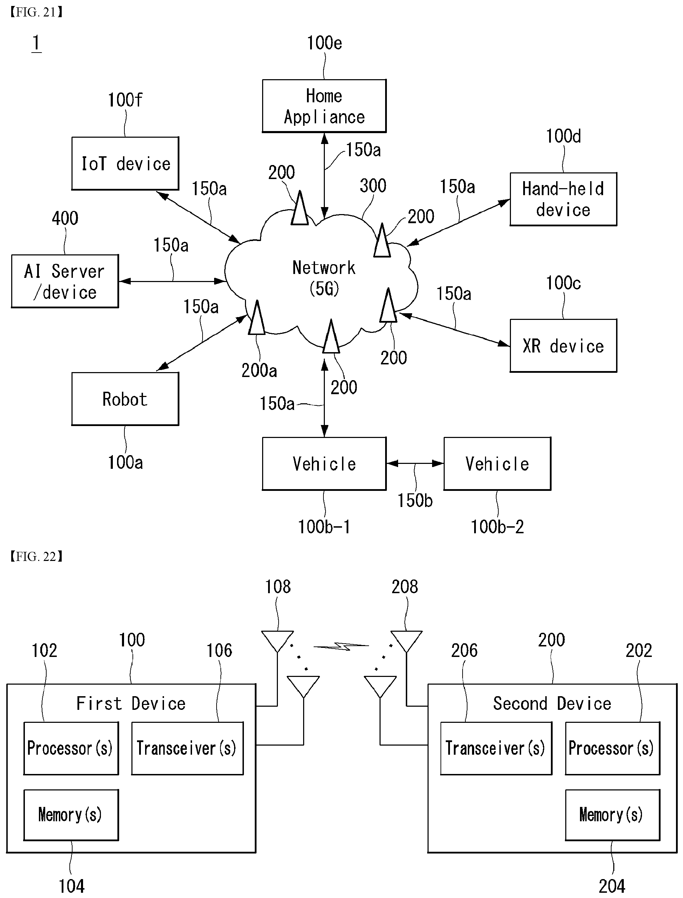

FIG. 21 illustrates a communication system applied to various embodiments of the present disclosure.

Referring to FIG. 21, a communication system 1 applied to the present disclosure includes wireless devices, Base Stations (BSs), and a network. Herein, the wireless devices represent devices performing communication using Radio Access Technology (RAT) (e.g., 5G New RAT (NR)) or Long-Term Evolution (LTE), 6G wireless communication) and may be referred to as communication/radio/5G devices//6G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, a 5G (e.g., NR) network, or a 6G network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

**Wireless device applicable** to the **present disclosure**

Examples of wireless devices to which various embodiments of the present disclosure are applied are described below.

FIG. 22 illustrates wireless devices applicable to various embodiments of the present disclosure.

Referring to FIG. 22, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 21.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

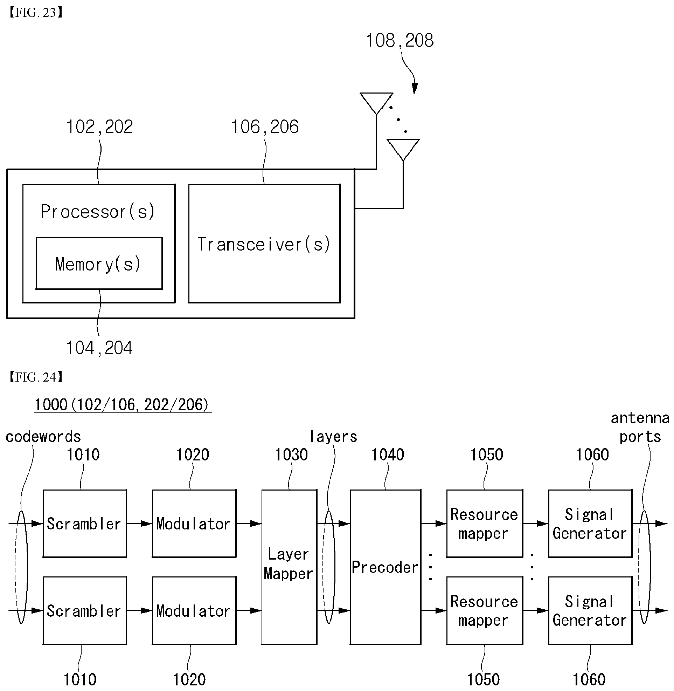

FIG. 23 illustrates another example of wireless devices applicable to various embodiments of the present disclosure.

According to FIG. 23, a wireless device may include at least one processor 102 and 202, at least one memory 104 and 204, at least one transceiver 106 and 206, one or more antennas 108 and 208.

A difference between the example of the wireless device illustrated in FIG. 22 and the example of the wireless device illustrated in FIG. 23 is that the processors 102 and 202 and the memories 104 and 204 are separated from each other in FIG. 22, but the memories 104 and 204 are included in the processors 102 and 202 in FIG. 23.

Here, the detailed description of the processors 102 and 202, the memories 104 and 204, the transceivers 106 and 206, and the antennas 108 and 208 are the same as described above, and thus the description of the repeated description is omitted in order to avoid unnecessary repetition of description.

Examples of signal processing circuit to which various embodiments of the present disclosure are applied are described below.

FIG. 24 illustrates a signal processing circuit for a transmission signal.

Referring to FIG. 24, a signal processing circuit 1000 may include scramblers 1010, modulators 1020, a layer mapper 1030, a precoder 1040, resource mappers 1050, and signal generators 1060. An operation/function of FIG. 24 may be performed, without being limited to, the processors 102 and 202 and/or the transceivers 106 and 206 of FIG. 22. Hardware elements of FIG. 24 may be implemented by the processors 102 and 202 and/or the transceivers 106 and 206 of FIG. 22. For example, blocks 1010 to 1060 may be implemented by the processors 102 and 202 of FIG. 22. Alternatively, the blocks 1010 to 1050 may be implemented by the processors 102 and 202 of FIG. 22 and the block 1060 may be implemented by the transceivers 106 and 206 of FIG. 22.

Codewords may be converted into radio signals via the signal processing circuit 1000 of FIG. 24. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 24. For example, the wireless devices (e.g., 100 and 200 of FIG. 22) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

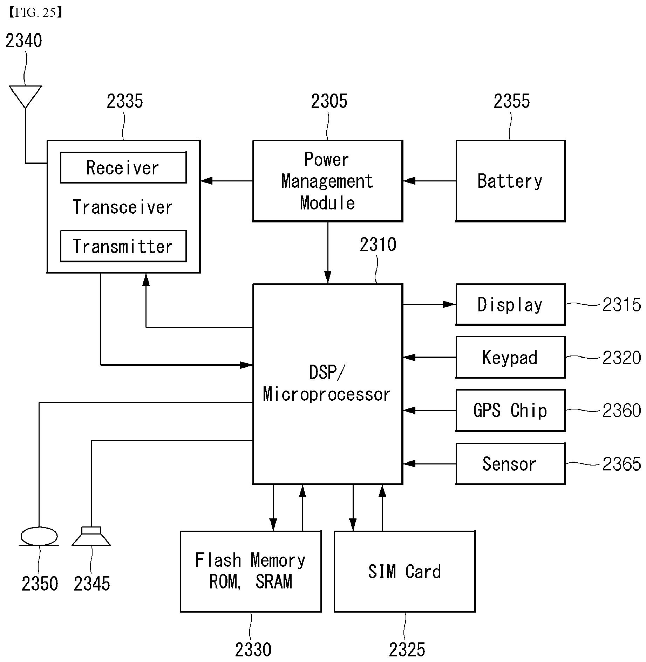

FIG. 25 illustrates an example of a wireless communication device applicable to the present disclosure.

Referring to FIG. 25, a wireless communication device, for example, a UE may include at least one of a processor 2310 such as a digital signal processor (DSP) or a microprocessor, a transceiver 2335, a power management module 2305, an antenna 2340, a battery 2355, a display 2315, a keypad 2320, a global positioning system (GPS) chip 2360, a sensor 2365, a memory 2330, a subscriber identification module (SIM) card 2325, a speaker 2345 and a microphone 2350. A plurality of antennas and a plurality of processors may be provided.

The processor 2310 may implement functions, procedures and methods described in the present disclosure. The processor 2310 in FIG. 25 may be the processors 102 and 202 in FIG. 23.

The memory 2330 is connected to the processor 2310 and stores information related to operations of the processor 2310. The memory 2330 may be located inside or outside the processor 2310 and connected to the processor through various techniques such as wired connection and wireless connection. The memory 2330 in FIG. 25 may be the memories 204 and 204 in FIG. 23.

A user may input various types of information such as telephone numbers using various techniques such as pressing buttons of the keypad 2320 or activating sound using the microphone 2350. The processor 2310 may receive and process the information of the user and execute an appropriate function such as calling using the input telephone number. In some scenarios, data may be retrieved from the SIM card 2325 or the memory 2330 to execute appropriate functions. In some scenarios, the processor 2310 may display various types of information and data on the display 2315 for user convenience.

The transceiver 2335 is connected to the processor 2310 and transmit and/or receive radio frequency (RF) signals. The processor 2310 may control the transceiver 2335 in order to start communication or to transmit RF signals including various types of information or data such as voice communication data. The transceiver 2335 includes a transmitter and a receiver for transmitting and receiving the RF signals. The antenna 2340 may facilitate transmission and reception of the RF signals. In some implementation examples, when the transceiver receives an RF signal, the transceiver may forward and convert the signal into a baseband frequency for processing performed by the processor. The signal may be processed through various techniques, such as converting into audible or readable information, and output through the speaker 2345. The transceiver 2335 in FIG. 25 may be the transceivers 106 and 206 in FIG. 23.

Although not illustrated in FIG. 25 various components such as a camera and a universal serial bus (USB) port may be additionally included in the UE. For example, the camera may be connected to the processor 2310.

FIG. 25 is merely an example of implementation with respect to the UE, and the present disclosure is not limited thereto. The UE need not essentially include all the components illustrated in FIG. 25. That is, some of the components, for example, the keypad 2320, the GPS chip 2360, the sensor 2365, and the SIM card 2325 may not be essential components. In this case, they may not be included in the UE.

The embodiments of the present disclosure described above are combinations of elements and features of the present disclosure. The elements or features may be considered selective unless otherwise mentioned. Each element or feature may be practiced without being combined with other elements or features. Further, an embodiment of the present disclosure may be constructed by combining parts of the elements and/or features. Operation orders described in embodiments of the present disclosure may be rearranged. Some constructions of any one embodiment may be included in another embodiment and may be replaced with corresponding constructions of another embodiment. It is obvious to those skilled in the art that claims that are not explicitly cited in each other in the appended claims may be presented in combination as an embodiment of the present disclosure or included as a new claim by subsequent amendment after the application is filed.

In the present disclosure, specific operations described to be performed by the base station may be performed by an upper node of the base station in some cases. That is, in a network including a plurality of network nodes including the base station, it is obvious that various operations performed for communication with the UE can be performed by the base station or network nodes other than the base station. The base station may be replaced with terms such as a fixed station, Node B, eNode B (eNB), and an access point.

The embodiments of the present disclosure may be achieved by various means, for example, hardware, firmware, software, or a combination thereof. In a hardware configuration, the methods according to the embodiments of the present disclosure may be achieved by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), processors, controllers, microcontrollers, microprocessors, etc.

In a firmware or software configuration, the embodiments of the present disclosure may be implemented in the form of a module, a procedure, a function, etc. For example, software code may be stored in a memory unit and executed by a processor. The memories may be located at the interior or exterior of the processors and may transmit data to and receive data from the processors via various known means.

Although embodiments of the present disclosure have been described using the LTE system, the LTE-A system and the NR system, this is merely an example and embodiments of the present disclosure can be applied to any communication system corresponding to the above definition.

In the present disclosure, specific operations described to be performed by the base station may be performed by an upper node of the base station in some cases. That is, in a network including a plurality of network nodes including the base station, it is obvious that various operations performed for communication with the UE can be performed by the base station or network nodes other than the base station. The base station may be replaced with terms such as a fixed station, Node B, eNode B (eNB), and an access point, and the name of the base station may be used as a comprehensive term including a remote radio head (RRH), eNB, a transmission point (TP), a reception point (RP), a relay, etc.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

**Claims**

1. An operation method of an electronic device in a wireless communication system, the method comprising:

   determining beam set indices of candidate beam sets consisting of a plurality of candidate beams for a multi-beam operation that is performed simultaneously through an access link with a user equipment (UE);
   transmitting, to a base station (BS), information for the beam set indices of the candidate beam sets;
   receiving, from the BS, indication information for the multi-beam operation based on at least one candidate beam set index among the beam set indices; and
   performing the multi-beam operation through the access link with the UE based on the at least one candidate beam set index.

2. The method of claim 1, wherein the candidate beam sets for a downlink transmit beam (DL TX beam) and an uplink receive beam (UL Rx beam) between the electronic device and the UE are independently configured, and wherein the indication information independently indicates the downlink transmit beam and the uplink receive beam.

3. The method of claim 1, wherein each of the candidate beam sets includes a plurality of candidate beams for the downlink transmit beam (DL TX beam) and a plurality of candidate beams for the uplink receive beam (UL Rx beam) between the electronic device and the UE, and wherein the indication information includes information for a downlink transmit beam and an uplink receive beam to be actually used within the at least one candidate beam set.

4. The method of claim 1, wherein each of the candidate beam sets includes a plurality of beam pairs of the downlink transmit beam (DL TX beam) and the uplink receive beam (UL Rx beam) between the electronic device and the UE.

5. The method of claim 1, wherein transmission and reception through the access link between the electronic device and the UE are simultaneously performed through the multi-beam operation.

6. The method of claim 1, further comprising:

   transmitting capability information of the electronic device to the BS,
   wherein the capability information includes a number of indices for the plurality of candidate beams included in the candidate beam sets, information for beam types of the indices for the plurality of candidate beams, and information for a multi-beam set in the access link, and
   wherein the information for the beam types of the indices for the plurality of candidate beams includes information for beam widths of the indices for the plurality of candidate beams.

7. The method of claim 6, wherein the indication information is configured based on the information for the beam widths of the indices for the plurality of candidate beams and the information for the multi-beam set.

8. An operating method of a base station (BS) in a wireless communication system, the method comprising:

   receiving, from an electronic device, information for beam set indices of candidate beam sets consisting of a plurality of candidate beams for a multi-beam operation that is performed simultaneously through an access link with the electronic device and a user equipment (UE); and
   transmitting, from the electronic device, indication information for the multi-beam operation based on at least one candidate beam set index among the beam set indices,
   wherein the multi-beam operation is performed through the access link between the electronic device and the UE based on the at least one candidate beam set index.

9. The method of claim 8, wherein the candidate beam sets for a downlink transmit beam (DL TX beam) and an uplink receive beam (UL Rx beam) between the electronic device and the UE are independently configured, and wherein the indication information independently indicates the downlink transmit beam and the uplink receive beam.

10. The method of claim 8, wherein each of the candidate beam sets includes a plurality of candidate beams for the downlink transmit beam (DL TX beam) and a plurality of candidate beams for the uplink receive beam (UL Rx beam) between the electronic device and the UE, and wherein the indication information includes information for a downlink transmit beam and an uplink receive beam to be actually used within the at least one candidate beam set.

11. The method of claim 8, wherein each of the candidate beam sets includes a plurality of beam pairs of the downlink transmit beam (DL TX beam) and the uplink receive beam (UL Rx beam) between the electronic device and the UE.

12. The method of claim 8, wherein transmission and reception through the access link between the electronic device and the UE are simultaneously performed through the multi-beam operation.

13. The method of claim 8, further comprising:

receiving capability information of the electronic device from the electronic device,
wherein the capability information includes the number of indices for the plurality of candidate beams included in the candidate beam sets, information for beam types of the indices for the plurality of candidate beams, and information for a multi-beam set in the access link, and
wherein the information for the beam types of the indices for the plurality of candidate beams includes information for beam widths of the indices for the plurality of candidate beams.

14. The method of claim 13, wherein the indication information is configured based on the information for the beam widths of the indices for the plurality of candidate beams and the information for the multi-beam set.

15. An electronic device in a communication system, comprising:

a first device including a first transceiver;
a second device including a first transceiver;
at least one processor; and
at least one memory operably connectable to the at least one processor, and storing instructions of performing operations when executed by the at least one processor,
wherein the operations include all steps of the method of any one of claims 1 to 7.

16. A base station (BS) in a communication system, the BS comprising:

a transceiver;
at least one processor; and
at least one memory operably connectable to the at least one processor, and storing instructions of performing operations when executed by the at least one processor,
wherein the operations include all steps of the method of any one of claims 8 to 14.

17. A control device controlling an electronic device in a communication system, comprising:

at least one processor; and
at least one memory operably accessing the at least one processor,
wherein the at least one memory stores instructions for performing operations based on being executed by the at least one processor, and
wherein the operations include all steps of the method of any one of claims 1 to 7.

18. A control device controlling a base station (BS) in a communication system, comprising:

at least one processor; and
at least one memory operably accessing the at least one processor,
wherein the at least one memory stores instructions for performing operations based on being executed by the at least one processor, and
wherein the operations include all steps of the method of any one of claims 8 to 14.

19. One or more non-transitory computer readable media storing one or more instructions, wherein the one or more instructions perform operations based on being executed by one or more processors, and

wherein the operations include all steps of the method of any one of claims 1 to 7.

20. One or more non-transitory computer readable media storing one or more instructions, wherein the one or more instructions perform operations based on being executed by one or more processors, and
wherein the operations include all steps of the method of any one of claims 8 to 14.

EP 4 593 446 A1

【FIG. 1】

【FIG. 2】

30

【FIG. 3】

Resource grid

A carrier

A BWP

1RB

1 RE

1 subcarrier

1 symbol

l=0 · · ·

k=0

【FIG. 4】

DL only

UL only

DL control

UL control

Mixed UL-DL

Slot

DL          UL

【FIG. 5】

5GC — Backhaul / NG — CU — Midhaul / F1 — DU — Fronthaul — RU

【FIG. 6】

5GC — Backhaul / NG — CU — Midhaul / F1 — DU — RU

【FIG. 7】

5GC — Backhaul / NG — CU — DU — Fronthaul — RU

【FIG. 8】

5GC — Backhaul / NG — CU — DU — RU

【FIG. 9】

gNB    NCR    UE

【FIG. 10】

【FIG. 11】

gNB

Repeater

UE

【FIG. 12】

gNB

Tx#3

Tx#2

Tx#0

Tx#1

RU

Tx#3

Tx#2

Tx#0

Tx#1

UE

【FIG. 13】

M

candidate
beam set

| #0 | #1 | #2 | #3 | #4 | #5 | #6 | #7 | #8 | #9 |

RU
applicable
beam index

$N_{AC}$

【FIG. 14】

| #0 | #1 | #2 | #3 | #4 | #5 | #6 | #7 | #8 | #9 |

RU UL Rx
applicable
beam index

$M_{DL}$

| Tx | Tx | Tx |

| Rx | Rx | Rx |

$M_{UL}$

candidate beam set
by RRC configuration e.g.,
CondidateBeamIndex-NCR

| #0 | #1 | #2 | #3 | #4 | #5 | #6 | #7 | #8 | #9 |

RU DL Tx
applicable
beam index

$N_{AC}$

【FIG. 15】

$M_1$

candidate
beam set
for UE #1

| #0 | #1 | #2 | #3 | #4 | #5 | #6 | #7 | #8 | #9 | #10 | #11 | #12 | #13 | #14 |

RU
applicable
beam index
for UE #1

$N_{AC}$

【FIG. 16】

【FIG. 17】

【FIG. 18】

Beam type info: Beam#1=2, Beam#3=2, Beam#4=1, Beam#5=3, Beam#7=1, Beam#9=4
Max, beam width for multiple beam Tx/Rx = 4

【FIG. 19】

Start

Determine beam set indices of candidate beam sets — S1910

Transmit information for beam set indices to base station — S1920

Receive indication information for multi-beam operation from base station — S1930

Perform multi-beam operation with UE through access link — S1940

End

【FIG. 20】

Start

Receive information for beam set indices from electronic device — S2010

Transmit indication information for multi-beam operation to electronic device — S2020

End

【FIG. 21】

【FIG. 22】

【FIG. 23】

108,208

102,202                    106,206

Processor(s)

Memory(s)    Transceiver(s)

104,204

【FIG. 24】

1000 (102/106, 202/206)

codewords                              layers                    antenna ports

1010        1020        1030    1040    1050        1060

→ Scrambler → Modulator →  Layer  → Precoder → Resource → Signal →
                          Mapper              mapper    Generator

→ Scrambler → Modulator →              →        → Resource → Signal →
                                                 mapper    Generator

1010        1020                            1050        1060

【FIG. 25】

2340

2335

2305

2355

| Receiver | Power Management Module | Battery |

Transceiver

Transmitter

2310

DSP/
Microprocessor

Display ~2315

Keypad ~2320

GPS Chip ~2360

Sensor ~2365

2350  2345

Flash Memory
ROM, SRAM

SIM Card

2330

2325

【FIG. 26】

Agreement
Capture the followint model of network controlled repeater in TR 38.867

- → The NCR MT is definde as a function entity to communicate with a gNB via Control link(C-link) to enable the information exchanges(e.g. side control information).
  The C link is based on NR Uu interface.
  ○ → Note:Side control information is at least for the control of NCR-Fwd

- → The NCR-Fwd is definde as a function entity to perform the amplify and forwarding of UL/DL RF signal between gNB and UE via backhaul link and access link. The behavior of the NCR-Fwd will be controlled according to the received side control information from gNB.

## INTERNATIONAL SEARCH REPORT

| International application No. |
| --- |
| **PCT/KR2023/013594** |

### A. CLASSIFICATION OF SUBJECT MATTER

**H04W 16/28**(2009.01)i; **H04B 7/0408**(2017.01)i; **H04W 72/27**(2023.01)i; **H04W 84/04**(2009.01)i

According to International Patent Classification (IPC) or to both national classification and IPC

### B. FIELDS SEARCHED

Minimum documentation searched (classification system followed by classification symbols)

H04W 16/28(2009.01); H04B 7/06(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: simultaneous multi-beam, candidate beam, beam set index, access link, indication

### C. DOCUMENTS CONSIDERED TO BE RELEVANT

| Category* | Citation of document, with indication, where appropriate, of the relevant passages | Relevant to claim No. |
| --- | --- | --- |
| A | HUAWEI et al. Discussions on side control information to enable NR network-controlled repeater. R1-2203133, 3GPP TSG-RAN WG1 Meeting #109-e, e-Meeting. 29 April 2022.<br>　　See section 4.1. | 1-20 |
| A | FUJITSU. Discussion on side control information for NR network-controlled repeaters. R1-2206174, 3GPP TSG RAN WG1 #110. Toulouse, France. 12 August 2022.<br>　　See sections 2.2.1-2.2.2. | 1-20 |
| A | CATT. Side control information to enable NR network-controlled repeaters. R1-2206413, 3GPP TSG RAN WG1 #110. Toulouse, France. 12 August 2022.<br>　　See sections 2.1-2.6. | 1-20 |
| A | ERICSSON. Control information for enabling NCR. R1-2207680, 3GPP TSG-RAN WG1 Meeting #110. Toulouse, France. 12 August 2022.<br>　　See section 2.3. | 1-20 |
| A | US 2021-0409085 A1 (QUALCOMM INCORPORATED) 30 December 2021 (2021-12-30)<br>　　See paragraphs [0073]-[0089]; and claim 1. | 1-20 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **21 December 2023** | **21 December 2023** |

| Name and mailing address of the ISA/KR | Authorized officer |
| --- | --- |
| **Korean Intellectual Property Office**<br>**Government Complex-Daejeon Building 4, 189 Cheongsa-**<br>**ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2023/013594**

| Patent document cited in search report | | | Publication date (day/month/year) | Patent family member(s) | | | Publication date (day/month/year) |
|---|---|---|---|---|---|---|---|
| US | 2021-0409085 | A1 | 30 December 2021 | CN | 112425235 | A | 26 February 2021 |
| | | | | EP | 3815443 | A1 | 05 May 2021 |
| | | | | US | 11057089 | B2 | 06 July 2021 |
| | | | | US | 11196471 | B2 | 07 December 2021 |
| | | | | US | 11728860 | B2 | 15 August 2023 |
| | | | | US | 2020-0007208 | A1 | 02 January 2020 |
| | | | | US | 2020-0204236 | A1 | 25 June 2020 |
| | | | | WO | 2020-006277 | A1 | 02 January 2020 |

Form PCT/ISA/210 (patent family annex) (July 2022)